# EUROPEAN PATENT APPLICATION

(11) **EP 4 734 593 A1**
(43) Date of publication of application: **29.04.2026**
(21) Application number: 24850639.6
(22) Date of filing: 24.05.2024
(51) Int. Cl.: H04W 24/02

(54) **COMMUNICATION METHOD AND APPARATUS**

(30) Priority: 09.08.2023 CN 202311009009
(71) Applicant: Huawei Technologies Co., Ltd., Shenzhen, Guangdong 518129 (CN)
(72) Inventor: PAN, Qi, Shenzhen, Guangdong 518129 (CN)
(74) Representative: Körber, Martin Hans
(86) International application number: PCT/CN2024/095308
(87) International publication number: WO 2025/030987

(57) **Abstract**

This application relates to the field of communication technologies, and provides a communication method and apparatus. In the method, an access and mobility management network element may actively indicate a session management network element to report a data size of service data, for example, a first data size of service data buffered by a network when a terminal is in an inactive state, so that the access and mobility management network element can notify an access network device of a corresponding data size, for example, a second data size, based on the data size of the service data, to help the access network device perform more accurate MT SDT decision.

## Description

This application claims priority to Chinese Patent Application No. 202311009009.4, filed with the China National Intellectual Property Administration on August 9, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a radio resource control (radio resource control, RRC) inactive (inactive) state, a terminal may use a small data transmission (small data transmission, SDT) mechanism, for example, mobile terminated (mobile terminated, MT), that is, downlink MT SDT, so that transmission of a small data size can be performed without restoring an original data radio bearer (data radio bearer, DRB)/signalling radio bearer (signalling radio bearer, SRB), to reduce energy consumption of a terminal side while reducing complexity.

For example, when downlink data arrives, a user plane function (user plane function, UPF) network element reports a downlink data arrival notification (downlink data notification, DDN) message to a session management function (session management function, SMF) network element, and the SMF network element correspondingly initiates an Namf service to an access and mobility management function (access and mobility management function, AMF) network element, to determine whether UE is reachable currently. Then, when the terminal is to be reachable, the AMF network element notifies a radio access network (radio access network, RAN) device of downlink data arrival, to assist the RAN device in performing MT SDT decision.

However, how to ensure accuracy of the MT SDT decision is a hot issue in current research.

### SUMMARY

Embodiments of this application provide a communication method and apparatus, to ensure accuracy of MT SDT decision.

To achieve the foregoing objective, this application uses the following technical solutions.

According to a first aspect, a communication method is provided. The method includes: An access and mobility management network element sends first information to a session management network element, and receives a first data size from the session management network element. The first information is used to trigger the session management network element to report a data size of buffered service data of a terminal, the buffered service data of the terminal is service data buffered by a network when the terminal is in an inactive state, and the first data size is the data size of the buffered service data of the terminal. In this way, the access and mobility management network element sends a second data size to an access network device of the terminal based on the first data size.

It can be learned that, the access and mobility management network element may actively indicate the session management network element to report the data size of the service data, for example, the first data size of the service data buffered by the network when the terminal is in the inactive state, so that the access and mobility management network element can notify the access network device of a corresponding data size, for example, the second data size, based on the data size of the service data, to help the access network device perform more accurate MT SDT decision.

In a possible design solution, that the access and mobility management network element sends the first information to the session management network element includes: When a state of the terminal changes to a reachable state, the access and mobility management network element sends the first information to the session management network element, so that the session management network element reports a data size of service data buffered by the network during an unreachable state of the terminal, to improve accuracy of MT SDT decision. That the state of the terminal changes to the reachable state may be understood as that a terminal device is to be reachable before the access and mobility management network element triggers the access network device to perform paging.

Optionally, the method in the first aspect may further include: The access and mobility management network element determines that the state of the terminal changes to the reachable state. It may be understood that, compared with that another device/network element notifies the access and mobility management network element of a state change of the terminal, that the access and mobility management network element determines the state change of the terminal by the access and mobility management network element can avoid a delay and overheads generated during communication. For example, the access and mobility management network element determines, based on an eDRX parameter of the terminal device, for example, an eDRX cycle and a paging time window (PTW), that the state of the terminal changes to the reachable state or is to change to the reachable state.

Optionally, the first information is carried in a session context request message, and the first data size is carried in a session context response message, that is, an existing message is reused for implementation, to reduce implementation complexity of the solution, or may be carried in a new message to implement decoupling from the existing message, so that information element transfer is more flexible.

In a possible design solution, the first information includes first indication information, and the first indication information indicates the session management network element to report the data size of the buffered service data of the terminal when a first timer expires. For example, the first timer expires when the state of the terminal changes to the reachable state, so that the session management network element reports the data size of the service data buffered by the network in the unreachable state of the terminal, to improve accuracy of MT SDT decision.

Optionally, the method in the first aspect may further include: The access and mobility management network element determines duration of the first timer based on a discontinuous reception parameter of the terminal, and sends the duration of the first timer to the session management network element. The discontinuous reception parameter of the terminal may indicate the eDRX cycle and/or the PTW of the terminal, that is, time during which the terminal in the inactive state is in a wake-up state (or the reachable state) and time during which the terminal in the inactive state is in a sleep state (or an unreachable state). In this way, the access and mobility management network element may determine the duration of the first timer based on time at which the state of the terminal changes to the reachable state, to ensure that the first timer expires when the state of the terminal changes to the reachable state or expires when the state of the terminal is to change to the reachable state.

Optionally, the first information may further include the duration of the first timer, that is, the duration of the first timer and the first indication information are carried in the same information, to reduce a quantity of communication times. Certainly, the duration of the first timer and the first indication information may alternatively be separately carried in different information to implement decoupling, so that information element transfer is more flexible.

In a possible design solution, the first information may include second indication information, and the second indication information indicates the session management network element to report the data size of the buffered service data of the terminal when the data size of the buffered service data of the terminal reaches a buffered data size threshold. For example, the data size threshold may be a size threshold of data that can be carried by an SDT DRB of the access network device. In other words, if the data size of the buffered service data of the terminal does not reach the buffered data size threshold, the access network device may perform MT SDT even if the session management network element does not report the data size. However, if the data size of the buffered service data of the terminal reaches the buffered data size threshold, the session management network element reports the data size in a timely manner, so that the access network device can restore the terminal to a connected state in a timely manner for data transmission, to reduce a transmission delay. Specifically, the second indication information may indicate the session management network element to report a data size of service data in one or more QoS flows of the terminal when the data size of the service data in the one or more QoS flows of the terminal reaches the buffered data size threshold.

Optionally, the first information further includes the buffered data size threshold, that is, the buffered data size threshold and the second indication information are carried in the same information, to reduce a quantity of communication times. Certainly, the buffered data size threshold and the second indication information may alternatively be separately carried in different information to implement decoupling, so that information element transfer is more flexible.

Optionally, the first information is carried in a protocol data unit PDU session context update message, or the first information is carried in a mobile terminated MT response message, that is, an existing message is reused for implementation, to reduce implementation complexity of the solution, or may be carried in a new message to implement decoupling from the existing message, so that information element transfer is more flexible.

In a possible design solution, the first information includes third indication information, and the third indication information indicates the session management network element to report a data size of service data of the terminal each time the network receives the service data of the terminal and when the terminal is in an unreachable state in the inactive state. In this way, the session management network element may report the data size of the service data buffered by the network during an unreachable state of the terminal, to improve accuracy of MT SDT decision.

Optionally, the first information is carried in an MT response message, and the first data size is carried in an MT request message, that is, an existing message is reused for implementation, to reduce implementation complexity of the solution, or may be carried in a new message to implement decoupling from the existing message, so that information element transfer is more flexible.

In a possible design solution, the first information further includes an identifier of a first quality of service QoS flow of the terminal. There may be one or more first QoS flows. The identifier of the first QoS flow may indicate that the buffered service data of the terminal is data corresponding to the first QoS flow, that is, indicate the session management network element to report a data size corresponding to the first QoS flow. The first QoS flow supports an SDT DRB small data transmission data bearer. In other words, the access and mobility management network element may indicate the session management network element to report only a data size of data corresponding to a specified QoS flow (for example, the first QoS flow that supports the SDT DRB), to avoid communication redundancy. Alternatively, if the first information does not include an identifier of the first QoS flow, the session management network element reports data sizes corresponding to all QoS flows in a session of the terminal, for example, reports, at a granularity of a QoS flow, a data size corresponding to each QoS flow.

Optionally, the method in the first aspect may further include: The access and mobility management network element receives second information from the access network device of the terminal. The second information may include information about the first QoS flow. That the access and mobility management network element sends the first information to the session management network element includes: The access and mobility management network element sends the first information to the session management network element based on the information about the first QoS flow. In other words, the access network device may selectively cause a core network to report a data size of a corresponding QoS flow based on a requirement of MT SDT, to avoid communication redundancy. Alternatively, when finding that there is buffered service data in a QoS flow other than the first QoS flow of the terminal, the access and mobility management network element does not send, to the access network device, the buffered service data size corresponding to the first QoS flow.

Optionally, the second information may further include SDT enabling information. The SDT enabling information may indicate the access and mobility management network element to report the data size of the buffered service data of the terminal. For example, an information element meaning of the SDT enabling information may be indicating that the terminal currently in the inactive state is configured with the SDT DRB, to implicitly indicate, through indication of configuration of the SDT DRB, the access and mobility management network element to report the data size of the buffered service data of the terminal. Alternatively, an information element meaning of the SDT enabling information may be indicating the access and mobility management network element to report the data size of the buffered service data of the terminal.

Optionally, the second information further includes a data size threshold of the SDT DRB, and that the access and mobility management network element sends the first information to the session management network element includes: When a data size of data buffered by the network is less than the data size threshold of the SDT DRB, the access and mobility management network element sends the first information to the session management network element. The data buffered by the network is data corresponding to the first QoS flow. In other words, when the data size of the data buffered by the network is less than an upper limit of a size of data that can be carried by the SDT DRB, the access and mobility management network element causes the network to continue buffering and report the data size. When the data size of the data buffered by the network is greater than or equal to an upper limit of a size of data that can be carried by the SDT DRB, the access and mobility management network element does not send the data size buffered by the network to the access network device.

In a possible design solution, the first data size includes a data size corresponding to at least one QoS flow of the terminal, and the second data size is a data size corresponding to a QoS flow that supports the SDT DRB in the at least one QoS flow. It may be understood that, for a QoS flow that does not support the SDT DRB, even if the network buffers data corresponding to the QoS flow, the access network device cannot transmit the data through the MT SDT. In this case, the access and mobility management network element may screen out a to-be-reported data size, and provide only the data size corresponding to the QoS flow that supports the SDT DRB, to avoid communication redundancy. Alternatively, when the first data size includes the data size corresponding to the at least one QoS flow of the terminal, if the access network device needs to consider not only the data size corresponding to the QoS flow that supports the SDT DRB but also a data size corresponding to the QoS flow that does not support the SDT DRB when performing MT SDT decision, the access and mobility management network element may directly send the first data size to the access network device, that is, the first data size is the same as the second data size. Alternatively, if the first data size is a data size corresponding to a QoS flow that supports the SDT DRB, the access and mobility management network element may directly send the first data size to the access network device, that is, the first data size is the same as the second data size.

In a possible design solution, before the access and mobility management network element sends the first information to the session management network element, the method in the first aspect may further include: The access and mobility management network element receives the mobile terminated MT request message from the session management network element. The MT request message includes a third data size, and the third data size is a data size of the buffered service data of the terminal. When the terminal is in the unreachable state in the inactive state, the access and mobility management network element sends the MT response message to the session management network element based on the MT request message. The MT response message indicates that the terminal is unreachable. In other words, when the service data of the terminal arrives at the network for the first time, the access and mobility management network element may indicate the session management network element to subsequently report the data size of the buffered service data of the terminal, to avoid communication redundancy. For example, when no service data arrives at the network, the session management network element is still indicated, causing invalid reporting.

According to a second aspect, a communication method is provided. The method includes: A session management network element receives first information from an access and mobility management network element, and sends a first data size to the access and mobility management network element based on the first information. The first information is used to trigger the session management network element to report a data size of buffered service data of a terminal, the buffered service data of the terminal is service data buffered by a network when the terminal is in an inactive state, and the first data size is the data size of the buffered service data of the terminal.

In a possible design solution, the first information is carried in a session context request message, and the first data size is carried in a session context response message.

Optionally, the first information includes first indication information, and the first indication information indicates the session management network element to report the data size of the service data of the terminal when a first timer expires. Correspondingly, that the session management network element sends the first data size to the access and mobility management network element based on the first information includes: When the first timer expires, the session management network element sends the first data size to the access and mobility management network element.

Optionally, the method in the second aspect may further include: When receiving duration of the first timer from the access and mobility management network element, the session management network element starts the first timer.

Optionally, the first information further includes the duration of the first timer.

In a possible design solution, the first information includes second indication information, and the second indication information indicates the session management network element to report the data size of the buffered service data of the terminal when the data size of the buffered service data of the terminal reaches a buffered data size threshold. Correspondingly, that the session management network element sends the first data size to the access and mobility management network element based on the first information includes: When the first data size reaches the buffered data size threshold, the session management network element sends the first data size to the access and mobility management network element.

Optionally, the first information further includes the buffered data size threshold.

Optionally, the first information is carried in a protocol data unit PDU session context update message, or the first information is carried in a mobile terminated MT response message.

In a possible design solution, the first information includes third indication information, and the third indication information indicates the session management network element to report a data size of service data of the terminal each time the network receives the service data of the terminal and when the terminal is in an unreachable state in the inactive state. Correspondingly, that the session management network element sends the first data size to the access and mobility management network element based on the first information includes: When the network receives the buffered service data of the terminal, the session management network element sends, to the access and mobility management network element, the data size of the buffered service data of the terminal received this time as the first data size.

Optionally, the first information is carried in an MT response message, and the first data size is carried in an MT request message.

In a possible design solution, the first information further includes an identifier of a first QoS flow of the terminal, and the identifier of the first QoS flow indicates that the buffered service data of the terminal is data corresponding to the first QoS flow. In other words, the first data size is a data size of the data corresponding to the first QoS flow of the terminal.

Optionally, the first QoS flow supports an SDT DRB small data transmission data bearer.

In a possible design solution, the method in the second aspect may further include: The session management network element locally obtains the first data size from the session management network element based on the first information. Compared with obtaining the first data size from another device/network element, this can avoid a delay and overheads generated during communication.

In a possible design solution, a network element in the network includes a user plane network element, and the method in the second aspect may further include: The session management network element obtains the first data size from the user plane network element based on the first information. For example, the session management network element may send third information to the user plane network element based on the first information. The third information may be used to trigger the user plane network element to report the data size of the buffered service data of the terminal. In this way, the session management network element may receive the first data size sent by the user plane network element.

Optionally, if the first information includes the first indication information, the third information includes fourth indication information, the fourth indication information may indicate the user plane network element to report the data size of the buffered service data of the terminal when a second timer expires, and the second timer is determined based on the first timer. In other words, the session management network element may send the fourth indication information to the user plane network element based on the first indication information.

Further, the method in the second aspect may further include: The session management network element sends duration of the second timer to the user plane network element.

Further, the third information further includes the duration of the second timer.

Optionally, if the first information includes the second indication information, the third information includes fifth indication information, and the fifth indication information indicates the user plane network element to report the data size of the buffered service data of the terminal when the data size of the buffered service data of the terminal reaches the buffered data size threshold. In other words, the session management network element may send the fifth indication information to the user plane network element based on the second indication information.

Further, the third information may further include the buffered data size threshold.

Optionally, if the first information includes the third indication information, the third information includes sixth indication information, and the sixth indication information may indicate the user plane network element to report the data size of the service data of the terminal each time the service data of the terminal is received and when the terminal is in the unreachable state in the inactive state. In other words, the session management network element may send the sixth indication information to the user plane network element based on the third indication information.

Optionally, the third information may further include the identifier of the first QoS flow of the terminal, and the identifier of the first QoS flow may indicate the user plane network element to report the data size corresponding to the first QoS flow. If the third information does not include the identifier of the first QoS flow, the user plane network element reports data sizes corresponding to all QoS flows in a session of the terminal or data sizes corresponding to all QoS flows having a buffered data size, for example, reports, at a granularity of a QoS flow, a data size corresponding to each QoS flow.

Further, the first QoS flow supports the SDT DRB.

In addition, for technical effects of the method in the second aspect, refer to the technical effects of the method in the first aspect. Details are not described herein again.

According to a third aspect, a communication method is provided. The method includes: An access and mobility management network element receives signalling to be sent to a terminal in an unreachable state (for example, the terminal may be in the unreachable state in an inactive state); and the access and mobility management network element sends related information of the signalling to an access network device of the terminal. The related information of the signalling is used by the access network device to determine whether small data transmission SDT is used for signalling transmission. For example, the related information of the signalling includes a data size of the signalling.

It can be learned that, when receiving the signalling to be sent to the terminal in the unreachable state, the access and mobility management network element may notify the access network device of the related information (for example, the data size) of the signalling, so that the access network device performs more accurate MT SDT decision.

In a possible design solution, that the access and mobility management network element sends the related information of the signalling to the access network device of the terminal includes: When a state of the terminal changes to a reachable state, the access and mobility management network element sends the related information of the signalling to the access network device. In other words, the access and mobility management network element may send, to the access network device, the data size of the signalling to be sent by a network to the terminal during an unreachable state of the terminal, to improve accuracy of MT SDT decision. That the state of the terminal changes to the reachable state may be understood as that a terminal device is to be reachable before the access and mobility management network element triggers the access network device to perform paging.

According to a fourth aspect, a communication apparatus is provided. The communication apparatus includes a module configured to perform the method in any one of the first aspect to the third aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus in the fourth aspect, and the receiving module is configured to implement a receiving function of the communication apparatus in the fourth aspect.

Optionally, the communication apparatus in the fourth aspect may further include a storage module. The storage module stores a program or instructions. When the processing module executes the program or the instructions, the communication apparatus can perform the method in any one of the first aspect to the third aspect.

It may be understood that the communication apparatus in the fourth aspect may be a network device, may be a chip (system) or another part or component that may be disposed in the network device, or may be an apparatus including the network device. This is not limited in this application.

In addition, for technical effects of the communication apparatus in the fourth aspect, refer to the technical effects of the method in any one of the first aspect to the third aspect. Details are not described herein again.

According to a fifth aspect, a communication apparatus is provided. The communication apparatus includes a module configured to perform the method in any one of the first aspect to the third aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus in the fifth aspect, and the receiving module is configured to implement a receiving function of the communication apparatus in the fifth aspect.

Optionally, the communication apparatus in the fifth aspect may further include a storage module. The storage module stores a program or instructions. When the processing module executes the program or the instructions, the communication apparatus can perform the method in any one of the first aspect to the third aspect.

It may be understood that the communication apparatus in the fifth aspect may be a network device, may be a chip (system) or another part or component that may be disposed in the network device, or may be an apparatus including the network device. This is not limited in this application.

In addition, for technical effects of the communication apparatus in the fifth aspect, refer to the technical effects of the method in any one of the first aspect to the third aspect. Details are not described herein again.

According to a sixth aspect, a communication apparatus is provided. The communication apparatus includes a processor, and the processor is configured to perform the method in any one of the first aspect to the third aspect.

In a possible design solution, the communication apparatus in the sixth aspect may further include a transceiver. The transceiver may be a transceiver circuit or an interface circuit. The transceiver may be used by the communication apparatus in the sixth aspect to communicate with another communication apparatus.

In a possible design solution, the communication apparatus in the sixth aspect may further include a memory. The memory and the processor may be integrated together, or may be disposed separately. The memory may be configured to store a computer program and/or data in the method in any one of the first aspect to the third aspect.

In this embodiment of this application, the communication apparatus in the sixth aspect may be the network device in any one of the first aspect to the third aspect, a chip (system) or another part or component that may be disposed in the network device, or an apparatus including the network device.

In addition, for technical effects of the communication apparatus in the sixth aspect, refer to the technical effects of the method in any one of the first aspect to the third aspect. Details are not described herein again.

According to a seventh aspect, a communication apparatus is provided. The communication apparatus includes a processor. The processor is coupled to a memory. The processor is configured to execute a computer program stored in the memory, to cause the communication apparatus to perform the method in any one of the first aspect to the third aspect.

In a possible design solution, the communication apparatus in the seventh aspect may further include a transceiver. The transceiver may be a transceiver circuit or an interface circuit. The transceiver may be used by the communication apparatus in the seventh aspect to communicate with another communication apparatus.

In this embodiment of this application, the communication apparatus in the seventh aspect may be the network device in any one of the first aspect to the third aspect, a chip (system) or another part or component that may be disposed in the network device, or an apparatus including the network device.

In addition, for technical effects of the communication apparatus in the seventh aspect, refer to the technical effects of the method in any one of the first aspect to the third aspect. Details are not described herein again.

According to an eighth aspect, a communication apparatus is provided, and includes a processor and a memory. The memory is configured to store a computer program, and when the processor executes the computer program, the communication apparatus can perform the method in any one of the first aspect to the third aspect.

In a possible design solution, the communication apparatus in the eighth aspect may further include a transceiver. The transceiver may be a transceiver circuit or an interface circuit. The transceiver may be used by the communication apparatus in the eighth aspect to communicate with another communication apparatus.

In this embodiment of this application, the communication apparatus in the eighth aspect may be the network device in any one of the first aspect to the third aspect, a chip (system) or another part or component that may be disposed in the network device, or an apparatus including the network device.

In addition, for technical effects of the communication apparatus in the eighth aspect, refer to the technical effects of the method in any one of the first aspect to the third aspect. Details are not described herein again.

According to a ninth aspect, a communication system is provided. The communication system includes at least two devices in the first aspect to the third aspect.

According to a tenth aspect, a computer-readable storage medium is provided, and includes a computer program or instructions. When the computer program or the instructions are run on a computer, the computer can perform the method in any one of the first aspect to the third aspect.

According to an eleventh aspect, a computer program product is provided, and includes a computer program or instructions. When the computer program or the instructions are run on a computer, the computer can perform the method in any one of the first aspect to the third aspect.

### BRIEF DESCRIPTION OF DRAWINGS

FIG. 1 is a diagram of an architecture of a 5G mobile communication system;
FIG. 2 is a diagram of an architecture of a communication system according to an embodiment of this application;
FIG. 3 is a schematic flowchart 1 of a communication method according to an embodiment of this application;
FIG. 4A and FIG. 4B are a schematic flowchart 2 of a communication method according to an embodiment of this application;
FIG. 5 is a schematic flowchart 3 of a communication method according to an embodiment of this application;
FIG. 6A and FIG. 6B are a schematic flowchart 4 of a communication method according to an embodiment of this application;
FIG. 7A and FIG. 7B are a schematic flowchart 5 of a communication method according to an embodiment of this application;
FIG. 8 is a schematic flowchart 6 of a communication method according to an embodiment of this application;
FIG. 9 is a diagram 1 of a structure of a communication apparatus according to an embodiment of this application; and
FIG. 10 is a diagram 2 of a structure of a communication apparatus according to an embodiment of this application.

### DESCRIPTION OF EMBODIMENTS

For ease of understanding, the following first describes technical terms and an applied architecture in embodiments of this application.

### 1. 5th generation (5th generation, 5G) mobile communication system (referred to as a 5G system (5G system, 5GS) for short)

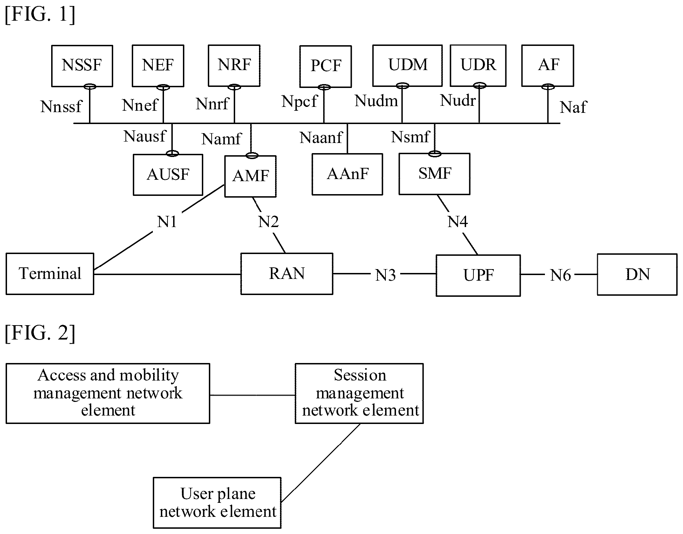

FIG. 1 is a diagram of an architecture of the 5GS. As shown in FIG. 1, the 5GS includes an access network (access network, AN) and a core network (core network, CN), and may further include a terminal.

There may be one or more terminals, for example, a first terminal, a second terminal, and a third terminal. The terminal may be a terminal having receiving and sending functions, or may be a chip or a chip system disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a smart home device (for example, a refrigerator, a television, an air conditioner, or a meter), a smart robot, a robot arm, a workshop device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) or the like having a terminal function, a flight device (for example, a smart robot, a hot air balloon, an uncrewed aerial vehicle, or an airplane), or the like. The terminal in this application may alternatively be a vehicle-mounted module, a vehicle-mounted assembly, a vehicle-mounted component, a vehicle-mounted chip, or a vehicle-mounted unit that is disposed in a vehicle as one or more components or units. The terminal device may alternatively be another device having a terminal function. For example, the terminal device may alternatively be a device that functions as a terminal in D2D communication.

A device form of the terminal is not limited in embodiments of this application. An apparatus configured to implement a function of the terminal device may be a terminal device, or may be an apparatus, for example, a chip system, that can support the terminal device in implementing the function. The apparatus may be installed in a terminal device or used together with the terminal device. In this embodiment of this application, the chip system may include a chip, or may include a chip and another discrete component.

The foregoing AN is for implementing an access-related function, may provide a network access function for an authorized user in a specific area, and can determine transmission links with different quality based on a user level, a service requirement, and the like, to perform transmission of user data. The AN forwards a control signal and the user data between the terminal and the CN. The AN may include an access network device, or may be referred to as a RAN device. The CN is mainly responsible for maintaining subscription data of a mobile network, and provides functions such as session management, mobility management, policy management, and security authentication for the terminal. The CN mainly includes the following network elements: a UPF network element, an authentication server function (authentication server function, AUSF) network element, an AMF network element, an SMF network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR), and an application function (application function, AF).

There may be one or more RAN devices, that is, access network apparatuses. The access network apparatus may be a device having a wireless transceiver function, or may be a chip or a chip system disposed in the device, and is located in an access network (access network, AN) of the communication system, to provide an access service for the terminal. For example, the access network apparatus may be referred to as a radio access network (radio access network, RAN) device, and may be specifically an access network device in a next-generation mobile communication system, for example, a 6G access network device, for example, a 6G base station. Alternatively, in the next-generation mobile communication system, the access network apparatus may be named in another manner, which falls within the protection scope of embodiments of this application. This is not limited in this application. Alternatively, the access network apparatus may include a gNB in 5G, for example, a new radio (new radio, NR) system, may include one or a group of antenna panels (including a plurality of antenna panels) of a base station in 5G, or may be a network node that forms a gNB, a transmission point (transmission reception point, TRP, or transmission point, TP), or a transmission measurement function (transmission measurement function, TMF), for example, a central unit (central unit, CU), a distributed unit (distributed unit, DU), a CU-control plane (control plane, CP), or a CU-user plane (user plane, UP), a radio unit (radio unit, RU), an RSU having a base station function, a wired access gateway, or a 5G core network element. Alternatively, the access network apparatus may further include an access point (access point, AP) in a wireless fidelity (wireless fidelity, Wi-Fi) system, a wireless relay node, a wireless backhaul node, various forms of a macro base station, a micro base station (also referred to as a small cell), a relay station, an access point, a wearable device, a vehicle-mounted device, or the like.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The UPF network element is mainly responsible for user data handling (forwarding, receiving, charging, and the like). For example, the UPF network element may receive user data from a data network (data network, DN), and forward the user data to the terminal via the access network device. The UPF network element may alternatively receive the user data from the terminal via the access network device, and forward the user data to the DN. The DN network element is an operator network that provides a data transmission service for a user, for example, an internet protocol (internet protocol, IP) multi-media service (IP multi-media service, IMS), and an internet (internet). The DN may be an external network of an operator, or may be a network controlled by the operator, and is configured to provide a service for the terminal device.

The AUSF network element is mainly configured to perform security authentication on the terminal.

The AMF network element is mainly for mobility management in the mobile network, for example, user location update, registration of a user to a network, and user handover.

The SMF network element is mainly for session management in the mobile network, for example, session establishment, modification, and release. A specific function is, for example, allocating an internet protocol (internet protocol, IP) address to a user, or selecting a UPF network element that provides a data packet forwarding function.

The PCF network element mainly supports providing a unified policy framework to control network behavior, and providing a policy rule for a control layer network function, and is responsible for obtaining policy decision-related subscription information of the user. The PCF network element may provide a policy like a quality of service (quality of service, QoS) policy or a slice selection policy to the AMF network element and the SMF network element.

The NSSF network element is mainly configured to select a network slice for the terminal.

The NEF network element is mainly for capability supporting and event exposure.

The UDM network element is mainly configured to store user data, for example, subscription data and authentication/authorization data.

The UDR network element is mainly configured to store structured data. Stored content includes subscription data, policy data, externally exposed structured data, and application-related data.

The AF mainly supports interaction with the CN to provide a service, for example, affecting a data routing decision-making and a policy control function, or providing some third-party services for a network side.

### 2. 5G internet of things (internet of things, IoT) energy saving

NR machine type communication (machine type communication, MTC), for example, massive machine type communication (massive machine type communication, mMTC), is one of important application scenarios of a 5G network, and mainly oriented to various IoT service applications based on a cellular network. Different from low power wide area (low power wide area, LPWA), typical application scenarios of the NR MTC include video surveillance (such as a surveillance camera), an industrial sensor network (such as a temperature sensor and a pressure sensor), a wearable device (such as a smart band, a smart watch, and smart glasses), and the like. To meet a low power consumption requirement of an IoT device, it is defined in 3rd generation partnership project (3rd generation partnership project, 3GPP) R18 that extended discontinuous reception (extended discontinuous reception, eDRX) in an RRC inactive state may be enhanced, that is, long eDRX. An eDRX cycle of the long eDRX is greater than 10.24s, ensuring that a terminal can sleep for longer time in the RRC inactive state. This also brings new requirements to a CN. Therefore, the CN is introduced in the standard to assist a RAN device in processing downlink communication. For example, the CN helps buffer downlink data of a terminal in the long eDRX.

Specifically, when a terminal that supports REDCAP registers with a network side, a network may select, for the terminal based on a local policy configuration, an AMF network element that supports a long-latency communication capability. The long-latency communication capability may include a capability of performing reachability management on the terminal in the long eDRX, and a capability of indicating, when the terminal is unreachable, an SMF network element/a UPF network element to buffer downlink data. After configuring the long eDRX for the terminal, the RAN device may indicate, to the AMF network element, that the terminal has entered or is to enter the inactive state and a long eDRX parameter is configured, and send the eDRX parameter to the AMF network element. Then, the AMF indicates the SMF/UPF network element to buffer the downlink data of the terminal. In this way, when the downlink data of the terminal arrives at the UPF network element, the SMF/UPF network element buffers the corresponding downlink data, the UPF network element may further notify the SMF network element that the downlink data of the terminal arrives, and the SMF network element sends a terminal reachability query request to the AMF network element, to trigger paging and enable the terminal to restore a network connection. In addition, the SMF network element may further indicate whether an extended buffer capability (a long-time data buffer capability) is supported. If the terminal is currently reachable, the AMF network element may trigger the RAN device to page the terminal, to enable the terminal device to enter a connected state, and send the downlink data of the terminal to the terminal. However, if the terminal is currently unreachable, the AMF network element may notify the SMF network element of maximum wait time determined based on the eDRX parameter, and the SMF network element buffers the downlink data of the terminal based on the maximum wait time. Then, when the terminal is to be reachable, the AMF network element may trigger, by using an N2 message, the RAN device to page the terminal, to enable the terminal to be restored to the RRC connected state, and send the previously buffered downlink data to the terminal via the RAN device.

### 3. SDT

In an RRC inactive state, a RAN device may use an SDT mechanism, so that transmission of a small data size can be performed without restoring an original DRB/SRB, to reduce energy consumption of a terminal side while reducing complexity. When a terminal restores the original DRB/SRB, the terminal enters a connected state. In other words, the original DRB/SRB is a DRB/an SRB used by the terminal in the connected state.

For example, when the terminal is released to the RRC inactive state (in other words, an inactive state), the RAN device may indicate, to the terminal, specific DRBs/SRBs that are DRBs/SRBs used for SDT, that is, SDT DRBs/SRBs, in other words, whether the SDT may be used to perform DRB/SRB restoration for each DRB/SRB configuration. When the terminal has uplink data or signalling to be sent, the terminal may determine, based on a service requirement and whether a corresponding DRB/SRB is configured with the SDT DRB/SRB, whether to initiate mobile originated (mobile initiated, MO), that is, uplink MO SDT. Certainly, for the MO SDT, a data size (data size) or other information may also be considered. For details, it depends on internal implementation of the terminal, and this is not limited in the standard. If the UE decides not to trigger the MO SDT transmission, the original regular DRB/SRB is restored. When there is downlink data, because the RRC inactive state is considered in a case in which an eDRX cycle is less than 10.24s, a core network does not assist the RAN device in processing the downlink data or downlink signalling. To be specific, the RAN device receives the downlink data from a UPF network element, and the RAN device may determine, based on whether a DRB corresponding to the downlink data is configured with the SDT and a specific data size of the downlink data, whether to perform mobile terminated (mobile terminated, MT), that is, downlink MT SDT. Specifically, if the RAN device determines to perform MT SDT, the RAN device adds indication information of the MT SDT to a paging message during downlink paging, to trigger the terminal to restore a corresponding SDT DRB/SRB when a connection is restored.

After the foregoing long eDRX is introduced in R18, the downlink data or signalling of the terminal is processed by the CN. For details, refer to the foregoing related descriptions. However, because the RAN device cannot sense the DRB corresponding to the downlink data and the data size of the downlink data, currently, the standard supports introduction of an identifier of a QoS flow (flow) corresponding to the downlink data, for example, a QoS flow ID, a PDU session identifier (PDU Session ID), and a data size, into the foregoing N2 message, to assist the RAN device in performing MT SDT decision. Specifically, when the downlink data arrives, the UPF network element reports a DDN message to an SMF network element, and the SMF network element correspondingly sends an Namf service message (for example, an MT enable UE reachability request (Namf_MT_EnableUERechability request) message) to an AMF network element, to query for UE reachability or enable UE reachability. In this case, if the terminal is currently unreachable because the terminal enters eDRX sleep, the AMF network element rejects an Namf service of the SMF network element, and indicates the SMF network element not to initiate the corresponding Namf service. When a state of the terminal is to change to a reachable state, the AMF network element may trigger the RAN device to page the terminal, and notify the RAN device of a data size of buffered downlink data corresponding to each QoS flow, to assist the RAN device in performing MT SDT decision. In addition, after the connection is restored, regardless of whether the UE enters the connected state or is still in the inactive state to perform MO/MT SDT transmission, the AMF network element may further notify the SMF network element to cancel buffering or send the previously buffered downlink data.

However, an entire long eDRX cycle may be gone through in a period from time at which the downlink data of the terminal arrives at the UPF network element to time at which the AMF network element determines that the terminal is reachable and triggers the RAN device to page the terminal. In this time period, a data size of the downlink data buffered by the SMF network element/UPF network element may change. Therefore, how the AMF network element can notify the RAN device of a latest data size (or an accurate data size) is a problem to be resolved currently.

For the foregoing technical problems, embodiments of this application provide the following technical solutions.

The following describes technical solutions of this application with reference to accompanying drawings.

The technical solutions in embodiments of this application may be applied to various communication systems such as a wireless network system, a vehicle to everything (vehicle to everything, V2X) communication system, a device to device (device to device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, 5G, for example, an NR system, and a future communication system.

In embodiments of this application, "indication" may include a direct indication and an indirect indication, or may include an explicit indication and an implicit indication. Information indicated by a piece of information (for example, the following first indication information, second indication information, or third indication information) is referred to as to-be-indicated information. In a specific implementation process, the to-be-indicated information is indicated in a plurality of manners. For example, but not limited to, the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of each piece of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when there are a plurality of pieces of information that indicate a same type, different information may be indicated in different manners. In a specific implementation process, an indication manner may be selected based on a specific requirement. The selected indication manner is not limited in embodiments of this application. In this way, the indication manner in embodiments of this application should be understood as covering various methods that can cause a to-be-indicated party to learn of the to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit-end device by sending configuration information to a receive-end device.

"Predefinition" or "pre-configuration" may be implemented by pre-storing corresponding code or a corresponding table in a device, or may be implemented in another manner that may be used for indicating related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when...", "in a case of...", and "if" all mean that a device performs corresponding processing in an objective case, and are not intended to limit time, and the device is not required to perform a determining action during implementation, and do not mean any other limitation.

In descriptions of embodiments of this application, unless otherwise stated, "/" means an "or" relationship between associated objects, for example, A/B may represent A or B. In embodiments of this application, "and/or" describes only an association relationship between associated objects, and indicates that three relationships may exist. For example, A and/or B may represent three cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system shown in FIG. 2 is first used as an example to describe in detail a communication system applicable to embodiments of this application. For example, FIG. 2 is a diagram of an architecture of a communication system to which a communication method provided in embodiments of this application is applicable.

As shown in FIG. 2, the communication system is applicable to the foregoing 5GS, and mainly includes an access and mobility management network element and a session management network element.

The access and mobility management network element may be the AMF network element in the foregoing 5GS. For details, refer to the foregoing related descriptions, or a network element configured to implement a corresponding function of access and mobility management in a future communication system. This is not limited herein.

The session management network element may be the SMF network element in the foregoing 5GS. For details, refer to the foregoing related descriptions, or a network element configured to implement a corresponding function of session management in the future communication system. This is not limited herein.

In the communication system, an access and mobility management network element may actively indicate a session management network element to report a data size of service data, for example, a first data size of service data buffered by a network when a terminal is in an inactive state, so that the access and mobility management network element can notify an access network device of a corresponding data size, for example, a second data size, based on the data size of the service data, to help the access network device perform more accurate MT SDT decision; and/or when receiving signalling to be sent to the terminal in an unreachable state, the access and mobility management network element may further notify the access network device of related information (for example, a data size) of the signalling, so that the access network device performs more accurate MT SDT decision. The following provides specific descriptions by using method implementations.

It may be understood that the network in embodiments of this application may be a network with which the terminal registers or is attached, for example, an operator network, and may be specifically a public land mobile network (public land mobile network, PLMN), or may be a network of another type or standard. This is not limited herein. Unless otherwise specified, the "network" mentioned below may be understood as "a network element/a device/an entity in a network", for example, a session management network element, a user plane network element, or an access network device. This is not limited.

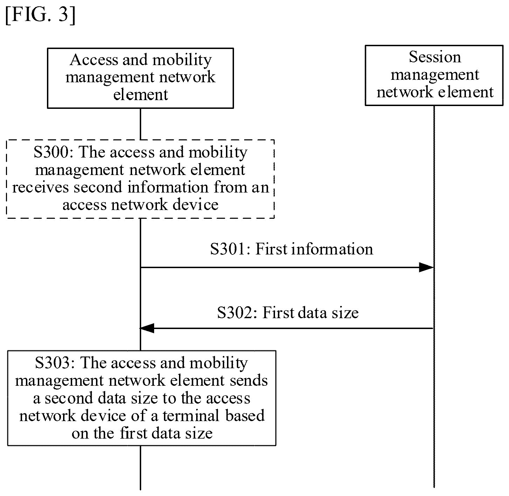

With reference to FIG. 3 to FIG. 8, the following specifically describes an interaction procedure between network elements/devices in the foregoing communication system by using method embodiments. The communication method provided in embodiments of this application is applicable to the foregoing communication system, and is specifically applied to various scenarios mentioned in the foregoing communication system. The following provides specific descriptions.

FIG. 3 is a schematic flowchart 1 of a communication method according to an embodiment of this application. The communication method is applicable to the foregoing communication system, and mainly relates to interaction between an access and mobility management network element, a session management network element, and a user plane network element.

As shown in FIG. 3, a procedure of the communication method is as follows.

S301: The access and mobility management network element sends first information to the session management network element.

Correspondingly, the session management network element receives the first information from the access and mobility management network element.

The first information may be used to trigger/indicate/request the session management network element to report a data size of buffered service data of a terminal. The buffered service data of the terminal may be service data buffered by a network when the terminal is in an inactive state. The service data may be specifically data corresponding to a first QoS flow of the terminal, or data to be carried on the first QoS flow.

Specifically, the first information may include an identifier of the first QoS flow, for example, a QFI. Further, the first information may indicate to report a data size corresponding to the first QoS flow, or indicate to report a data size of the data that corresponds to the first QoS flow and that is buffered by the network.

It should be noted that, that the network buffers the data corresponding to the first QoS flow mentioned above may be that a network element, for example, the session management network element or the user plane network element in the network (for example, a core network) buffers the data corresponding to the first QoS flow. This is not limited.

The first QoS flow may be one or more QoS flows of the terminal. The first QoS flow may be all or a part of QoS flows of the terminal. Specifically, the first QoS flow may be carried in one or more PDU sessions established by the session management network element. This is not limited.

For example, assuming that all QoS flows of the terminal include a QoS flow #1 to a QoS flow #3, the first QoS flow may be all the QoS flows of the terminal, including the QoS flow #1 to the QoS flow #3; or the first QoS flow is a part of QoS flows of the terminal, for example, the part of QoS flows may be QoS flows of different types, and may specifically include a QoS flow that supports an SDT DRB and a QoS flow that does not support the SDT DRB. The QoS flow that supports the SDT DRB may mean that a DRB corresponding to the QoS flow is configured with the SDT DRB, and transmission of data carried in the QoS flow can be performed through SDT. The QoS flow that does not support the SDT DRB may mean that a DRB corresponding to the QoS flow is not configured with the SDT DRB, and transmission of data carried in the QoS flow cannot be performed through the SDT. For another example, the part of QoS flows may alternatively be a QoS flow of a specified type, and may specifically include only a QoS flow that supports an SDT DRB. In other words, the first QoS flow supports the SDT DRB. An example in which the QoS flow #1 supports the SDT DRB, the QoS flow #2 and the QoS flow #3 do not support the SDT DRB, and the specified type is the QoS flow that supports the SDT DRB is used. In this case, the first QoS flow includes only the QoS flow #1.

It can be learned that the access and mobility management network element may send the first information, where the first information indicates the session management network element to report a data size of data corresponding to the QoS flow of the specified type (for example, the QoS flow that supports the SDT DRB). Specifically, the first information may include the specified type, to avoid communication redundancy.

It may be understood that, when the first information does not include the identifier of the first QoS flow, the session management network element may report, by default, data sizes of data that corresponds to all the QoS flows of the terminal and that is buffered by the network, for example, report, at a granularity of a QoS flow, a data size corresponding to each QoS flow, or report a data size corresponding to a QoS flow with downlink data arrival or buffered downlink data in all the QoS flows.

It should be noted that the session management network element may report, based on protocol predefinition, data sizes of buffered service data corresponding to specific QoS flows of the terminal, or may negotiate with the access and mobility management network element and/or an access network device in advance to report data sizes of buffered service data corresponding to specific QoS flows of the terminal. Further, after receiving the first information, the session management network element reports the data sizes of the QoS flows by default.

The access and mobility management network element may trigger, by using a sending occasion of the first information or information included in the first information, the session management network element to report the data sizes. The following separately provides descriptions in different manners.

Manner 1: When a state of the terminal changes to a reachable state, the access and mobility management network element sends the first information to the session management network element.

For example, the access and mobility management network element may obtain a discontinuous reception parameter of the terminal in advance from the access network device corresponding to the terminal (for example, an access network device currently accessed by the terminal). The discontinuous reception parameter may indicate an eDRX cycle and a paging time window (paging time window, PTW) of the terminal, that is, time during which the terminal in the inactive state is in a wake-up state (or the reachable state) and time during which the terminal in the inactive state is in a sleep state (or an unreachable state). In this way, the access and mobility management network element may determine that the state of the terminal changes to the reachable state, or determine an occasion at which the state of the terminal changes to the reachable state, to send the first information to the session management network element when or before the occasion arrives, for example, send a session context request message that carries the first information.

It should be noted that, the first information may be carried in an existing message for implementation, to reduce implementation complexity of the solution, or may be carried in a new message to implement decoupling from the existing message, so that information element transfer is more flexible.

It may be understood that a change of the state of the terminal may alternatively be notified by another device, for example, the access network device, to the access and mobility management network element. This is not limited. The change of the state of the terminal may be determined by the access and mobility management network element, to avoid a delay and overheads generated by notification by another network element.

In addition, because the network may buffer received service data of the terminal after the terminal enters the unreachable state, when the access and mobility management network element triggers reporting of a data size of the buffered service data when or before the state of the terminal changes to the reachable state, the session management network element may report the data size of the service data buffered by the network during the entire unreachable state of the terminal, to improve accuracy of MT SDT decision.

It may be understood that, unless otherwise specified, the "access network device" mentioned in this embodiment of this application refers to the "access network device corresponding to the terminal" or the "access network device currently accessed by the terminal". In addition, "the state of the terminal changes to the reachable state" in this embodiment of this application may be broadly understood. It may be understood as that before the access and mobility management network element triggers the access network device to perform paging, the state of the terminal has changed to the reachable state, is to change to the reachable state, or is before changing to the reachable state, for example, advanced by 10 milliseconds (ms) or any possible duration. In other words, when delays of communication and processing are considered, the session management network element is triggered in advance to report the data size, so that when the access and mobility management network element sends the data size to the access network device to perform MT SDT, the terminal can be just in the reachable state (or is to be the reachable state), to fully use duration of the reachable state to perform data transmission.

Manner 2: The first information includes first indication information, and the first indication information indicates the session management network element to report the data size of the buffered service data of the terminal when a first timer expires.

For example, the first timer may be a timer of the session management network element. The first timer may expire when the state of the terminal changes to the reachable state, so that the session management network element reports a data size of service data buffered by the network during an unreachable state of the terminal, to improve accuracy of MT SDT decision.

In Manner 2, the access and mobility management network element may reuse a session update message or an MT message to send the first information to the session management network element. For example, when the access network device notifies the access and mobility management network element that the terminal has been or is to be released to the inactive state, the access and mobility management network element may send the first information to the session management network element in the session update message, for example, a PDU session context update message, and indicate the session management network element to buffer downlink data of the terminal. For another example, the access and mobility management network element may send the first information to the session management network element in the MT message, for example, an MT enable UE reachability response (Namf_MT_EnableUERechability response) message. Specifically, when the terminal is in the inactive state, if service data of the terminal arrives at the user plane network element for the first time, the user plane network element may send a data arrival notification message to the session management network element, to indicate that the service data, having a third data size, of the terminal arrives, and trigger the terminal to enter the reachable state. In this way, the session management network element may send an MT request message, for example, an MT enable UE reachability request message, to the access and mobility management network element, to trigger paging for the terminal, so that the terminal restores a connection to the network; and optionally, indicate that the data size of the buffered service data of the terminal is the third data size. In response to the MT request message, the access and mobility management network element may determine a reachability status of the terminal, for example, determine that the terminal is currently unreachable. The access and mobility management network element may send, to the session management network element, an MT response message in response to the MT request message, for example, the MT enable UE reachability response message, to indicate that the terminal is unreachable, and the first information may also be carried in the MT response message.

It may be understood that, in the foregoing procedure in which the access and mobility management network element triggers the session management network element to buffer the downlink data, usually, before the downlink data arrives and the session management network element is triggered to query the access and mobility management network element for reachability of the terminal, if the access and mobility management network element has reused the PDU session context update message to send the first information to the session management network element, when the service data of the terminal arrives at the user plane network element for the first time, the session management network element may choose not to trigger the MT message, wait until the timer expires, and report, to the access and mobility management network element, a data size of service data of the terminal that is buffered by the network until the timer expires. Certainly, if the access and mobility management network element does not reuse the PDU session context update message to send the first information to the session management network element, when the session management network element reports the data size of the service data of the terminal for the first time in the MT enable UE reachability request message, the access and mobility management network element may take this opportunity to send the first information to the session management network element, so that the session management network element can subsequently report the first information on demand.

Optionally, the access and mobility management network element may further determine duration of the first timer based on a discontinuous reception parameter of the terminal. The duration of the first timer may be a maximum wait delay, and the maximum wait delay may indicate a time length needed by the terminal to be reachable, for example, a time length needed by the terminal to wake up from eDRX.

For example, the access and mobility management network element may determine the duration of the first timer based on an occasion that is indicated by the discontinuous reception parameter and at which the state of the terminal changes to the reachable state and an occasion at which the session management network element starts the first timer, to ensure that the first timer may expire when or before the state of the terminal changes to the reachable state, to ensure that the access and mobility management network element can obtain the data size corresponding to the first QoS flow in a timely manner. Specifically, when the access and mobility management network element determines a sending occasion of the first information, and a protocol predefines a mechanism in which the session management network element starts the first timer, assuming that the mechanism for starting the first timer is that the session management network element receives the first information, the access and mobility management network element may determine, based on the mechanism, the occasion at which the session management network element starts the first timer.

It should be noted that the mechanism in which the session management network element starts the first timer may alternatively be that the first timer is started when a preset duration passes since the first information is received, to ensure that the first timer expires before the state of the terminal changes to the reachable state. This is not limited.

For another example, the access and mobility management network element may determine, based on an occasion that is indicated by the discontinuous reception parameter and at which the state of the terminal changes to the reachable state, an occasion at which the access and mobility management network element sends an N2 message to the access network device to trigger paging. Further, the access and mobility management network element may determine the duration of the first timer based on the occasion at which the access and mobility management network element sends the N2 message to the access network device to trigger paging and an occasion at which the session management network element starts the first timer, to ensure that the first timer expires when or before the access and mobility management network element triggers a RAN to perform paging, and ensure that the access and mobility management network element can obtain the data size corresponding to the first QoS flow in a timely manner.

The access and mobility management network element may further send the duration of the first timer to the session management network element. For example, the duration of the first timer may also be carried in the first information, so that the duration of the first timer and the first indication information are carried in the same information, to reduce a quantity of communication times. However, this is not limited. The duration of the first timer and the first indication information may alternatively be separately carried in different information to implement decoupling, so that information element transfer is more flexible. That the access and mobility management network element sends the duration of the first timer to the session management network element is an example. For example, if the session management network element is locally preconfigured or predefined with the duration of the first timer, the access and mobility management network element may not send the duration of the first timer to the session management network element.

It may be understood that the first timer may be configured at a granularity of a QoS flow. For example, the duration of the first timer corresponds to the identifier of the first QoS flow in the first information. In this case, the first timer is configured for the first QoS flow, for example, the one or more QoS flows. In this case, when a first timer corresponding to a specific QoS flow expires, the session management network element reports a data size corresponding to the QoS flow. Alternatively, the session management network element may configure the first timer by using a QoS flow as a granularity by default.

Manner 3: The first information includes second indication information, and the second indication information indicates the session management network element to report the data size of the buffered service data of the terminal when the data size of the buffered service data of the terminal reaches a buffered data size threshold.

Specifically, a data size of buffered service data corresponding to the one or more QoS flows of the terminal is reported. For example, if the QoS flow corresponding to the buffered service data of the terminal, for example, the first QoS flow, supports the SDT DRB, the buffered data size threshold may be a size threshold of data that can be carried by the SDT DRB of the access network device, or may be determined based on the data size threshold. In other words, if the data size of the buffered service data of the terminal does not reach the buffered data size threshold, the access network device may perform MT SDT even if the session management network element does not report the data size. However, if the data size of the buffered service data of the terminal reaches the buffered data size threshold, the session management network element needs to report the data size to the access and mobility management network element in a timely manner, so that the access network device can determine, based on the data size of the buffered service data from the access and mobility management network element, not to perform MT SDT, and the access network device can restore the terminal to a connected state in a timely manner for data transmission, to reduce a transmission delay. The size threshold of the data that can be carried by the SDT DRB may be obtained by the access and mobility management network element from another network element (for example, the access network device) in advance, or may be preconfigured by the access and mobility management network element or predefined in the protocol. For another example, the buffered data size threshold may alternatively be dynamically determined by the access and mobility management network element. For example, if a current load of the network is high, the access and mobility management network element dynamically determines a low buffered data size threshold; or if the current load of the network is low, the access and mobility management network element dynamically determines a high buffered data size threshold.

It may be understood that, similar to the foregoing Manner 2, the first information may alternatively be carried in a PDU session context update message or an MT response message, that is, an existing message is reused for implementation, to reduce implementation complexity of the solution. For details, refer to related descriptions of Manner 2. Details are not described herein again. Alternatively, the first information may be carried in a new message to implement decoupling from an existing message, so that information element transfer is more flexible.

Optionally, the access and mobility management network element may further send the buffered data size threshold to the session management network element. For example, the buffered data size threshold may be carried in first information, so that the buffered data size threshold and the second indication information are carried in the same information, to reduce a quantity of communication times. Certainly, the buffered data size threshold and the second indication information may alternatively be separately carried in different information to implement decoupling, so that information element transfer is more flexible. It may be understood that, that the access and mobility management network element sends the buffered data size threshold to the session management network element is an example. For example, if the session management network element is locally preconfigured or predefined with the buffered data size threshold, the access and mobility management network element may not send the buffered data size threshold to the session management network element.

It may be understood that, for the session management network element, the buffered data size threshold may be configured at a granularity of a QoS flow. For example, the buffered data size threshold corresponds to the identifier of the first QoS flow in the first information. In this case, the buffered data size threshold is configured for the one or more first QoS flows. In this case, when a data size corresponding to a specific QoS flow exceeds the buffered data size threshold corresponding to the QoS flow, the session management network element reports the data size corresponding to the QoS flow. Alternatively, the session management network element may configure the buffered data size threshold by using a QoS flow as a granularity by default. In addition, values of buffered data size thresholds corresponding to QoS flows may be the same or may be different. For example, when each of the QoS flows supports an SDT DRB, a buffered data size threshold corresponding to each QoS flow is a size threshold of data that can be carried by the SDT DRB corresponding to each QoS flow. In this case, thresholds of data sizes that can be carried by these SDT DRBs may be different.

Manner 4: The first information includes third indication information, and the third indication information indicates the session management network element to report a data size of service data of the terminal each time the network receives the service data of the terminal and when the terminal is in an unreachable state in the inactive state.

In this way, the session management network element may report a data size of service data buffered by the network during an unreachable state of the terminal, to improve accuracy of MT SDT decision.

It may be understood that, similar to the foregoing Manner 2, the first information may alternatively be carried in a PDU session context update message or an MT response message, that is, an existing message is reused for implementation, to reduce implementation complexity of the solution. For details, refer to related descriptions of Manner 2. Details are not described herein again. Alternatively, the first information may be carried in a new message to implement decoupling from an existing message, so that information element transfer is more flexible.

It may be further understood that the session management network element may alternatively report, based on the third indication information and at a granularity of a QoS flow, a data size received by the network each time. For example, the third indication information corresponds to the identifier of the first QoS flow in the first information, to indicate that each time the network receives data corresponding to a specific QoS flow in the first QoS flow (for example, the one or more QoS flows), the session management network element reports a data size corresponding to the QoS flow. Alternatively, the session management network element may report, by using a QoS flow as a granularity by default, a data size received by the network each time.

It may be further understood that, that the terminal is in the unreachable state in the inactive state is associated with that the terminal in the inactive state is configured with the discontinuous reception parameter, for example, the terminal device in the inactive state is configured with an eDRX parameter of a long eDRX cycle. In other words, configuring the long eDRX cycle for the terminal in the inactive state means that the terminal is unreachable in the inactive state, or that the terminal in the inactive state is configured with the long eDRX cycle causes the terminal device in the inactive state to be unreachable.

S302: The session management network element sends a first data size to the access and mobility management network element based on the first information.

Correspondingly, the access and mobility management network element receives the first data size from the session management network element.

The first data size may be the data size of the buffered service data of the terminal, or the data size of the buffered service data corresponding to the first QoS flow.

It should be understood that because the first QoS flow may be the one or more QoS flows, the first data size may also include one or more data sizes. For example, when there are a plurality of QoS flows, the first data size may include data sizes respectively corresponding to the plurality of QoS flows. Specifically, the session management network element may send, to the access and mobility management network element, identifiers of the plurality of QoS flows and the data sizes corresponding to the identifiers of the plurality of QoS flows.

It should be further understood that, for different implementations of the first information, manners in which the session management network element reports the first data size are also different. The following provides descriptions with reference to the foregoing Manner 1 to Manner 4.

For the foregoing Manner 1, the session management network element receives the first information, and sends the first data size to the access and mobility management network element.

Specifically, when the session management network element buffers the service data of the terminal, the session management network element may locally obtain the first data size after receiving the first information, and report the first data size to the access and mobility management network element; or when the user plane network element buffers the service data of the terminal, the session management network element may find the user plane network element of the terminal based on the received first information, obtain the first data size from the user plane network element, and report the first data size to the access and mobility management network element.

For example, the session management network element may send third information, for example, a first N4 session modification message that carries the third information, to the user plane network element of the terminal based on the first information, to trigger the user plane network element to report the data size of the service data of the terminal. The third information may also include the identifier of the first QoS flow, or may not include the identifier of the first QoS flow. A specific principle of the third information is similar to that of the first information, and reference may be made for understanding. Details are not described herein again. The third information and the first information may be same information. In other words, the session management network element may forward the first information to the user plane network element. Alternatively, the third information and the first information may be different information. For example, the session management network element obtains the third information by converting the first information into an information element format that can be identified by the user plane network element. After receiving the third information, the user plane network element sends the first data size, for example, a second N4 session modification message that carries the first data size, to the session management network element. Correspondingly, the session management network element may receive the first data size sent by the user plane network element, and send, to the access and mobility management network element, a session context response message that carries the first data size, to respond to the session context request message. Optionally, as described above, the session context response message may further include the identifier of the first QoS flow, to indicate that the first data size is the data size corresponding to the first QoS flow.

It may be understood that if the session management network element triggers a paging procedure in advance by using the MT request message, for example, has reported the third data size, the first data size reported by the session management network element in this case may be an increment relative to the third data size, to be specific, the increment is obtained by subtracting the third data size from a data size of service data of the terminal that is buffered by the network until the first information is received. Alternatively, if the session management network element does not report the third data size in advance, the first data size reported by the session management network element in this case may be a total quantity, that is, a data size of service data of the terminal that is buffered by the network until the first information is received. Alternatively, regardless of whether the session management network element has reported the third data size in advance, the first data size reported by the session management network element in this case may be a total quantity.

For the foregoing Manner 2, the session management network element starts the first timer based on the received first indication information (refer to Case 11), or triggers the user plane network element to start a second timer (refer to Case 12).

### Case 11

In an example, when receiving the duration of the first timer from the access and mobility management network element, the session management network element sets the duration of the first timer based on the received duration, and starts the first timer when receiving the first indication information.

In another example, the session management network element is locally preconfigured with the duration of the first timer, and the session management network element may start the first timer when receiving the first indication information.

Further, when the first timer expires, the session management network element may send the first data size to the access and mobility management network element. For example, the session management network element may trigger, based on expiration of the first timer, obtaining of the first data size, and send the first data size to the access and mobility management network element. Optionally, the session management network element may further send the identifier of the first QoS flow, to indicate that the first data size is the data size corresponding to the first QoS flow.

Similar to the foregoing Manner 1, if the session management network element buffers the service data of the terminal, the session management network element may locally obtain the first data size, and report the first data size to the access and mobility management network element. If the user plane network element buffers the service data of the terminal, the session management network element may obtain the first data size from the user plane network element. For specific implementation, refer to related descriptions of the foregoing Manner 1. Details are not described herein again. In this way, the session management network element may send the first data size, for example, an Namf_MT service message that carries the first data size, to the access and mobility management network element. Optionally, the Namf_MT service message may further include the identifier of the first QoS flow, to indicate that the first data size is the data size corresponding to the first QoS flow.

### Case 12

When the user plane network element buffers the service data of the terminal, the session management network element may trigger the user plane network element to start the second timer.

The session management network element may also send the third information to the user plane network element of the terminal based on the first information. A specific implementation is similar to that in the foregoing Manner 1, and reference may be made for understanding. However, a difference lies in that the third information may include fourth indication information. The fourth indication information may indicate the user plane network element to report the data size of the buffered service data of the terminal when the second timer expires. The second timer may be a timer of the user plane network element. The fourth indication information and the first indication information may be same information. In other words, the session management network element may forward the first information (including the first indication information) to the user plane network element. Alternatively, the fourth indication information and the first indication information may be different information. In other words, the session management network element may send the fourth indication information to the user plane network element based on the first indication information. For example, the session management network element may convert the first indication information into an information element format that can be identified by the user plane network element, to obtain the fourth indication information, and then send, to the user plane network element, the third information that carries the fourth indication information.

Optionally, the session management network element may further send duration of the second timer to the user plane network element. The duration of the second timer may be the same as or different from the duration of the first timer. For example, when delays of processing and communication of the session management network element are considered, the session management network element may subtract the processing delay of the session management network element and/or the delay of communication between the session management network element and the user plane network element from the duration of the first timer, to obtain the duration of the second timer. The duration of the second timer may also be carried in the third information, so that the duration of the second timer and the fourth indication information are carried in the same information, to reduce a quantity of communication times. However, this is not limited. The duration of the second timer and the fourth indication information may alternatively be separately carried in different information to implement decoupling, so that information element transfer is more flexible. In addition, that the session management network element sends the duration of the second timer to the user plane network element is an example. For example, if the user plane network element is locally preconfigured or predefined with the duration of the second timer, the session management network element may alternatively not send the duration of the second timer to the user plane network element.

In an example, when receiving the duration of the second timer from the session management network element, the user plane network element may set the duration of the second timer based on the received duration, and start the second timer when receiving the fourth indication information. In another example, the user plane network element is locally preconfigured with the duration of the second timer, and the user plane network element may start the local second timer when receiving the fourth indication information. Further, when the second timer expires, the user plane network element may send the first data size to the session management network element. For example, the user plane network element may trigger, based on expiration of the second timer, obtaining of the first data size, and send the first data size to the session management network element, for example, a second N4 session modification message that carries the first data size. Optionally, the second N4 session modification message may further include the identifier of the first QoS flow, to indicate that the first data size is the data size corresponding to the first QoS flow. In this way, the session management network element may also send the first data size, for example, an Namf_MT service message that carries the first data size, to the access and mobility management network element. Optionally, the Namf_MT service message may further include the identifier of the first QoS flow, to indicate that the first data size is the data size corresponding to the first QoS flow.

It may be understood that the second timer may also be configured at a granularity of a QoS flow. For example, the duration of the second timer corresponds to the identifier of the first QoS flow in the third information. In this case, the second timer is configured for the first QoS flow, for example, the one or more QoS flows. In this case, when a first timer corresponding to a specific QoS flow expires, the user plane network element may report a data size corresponding to the QoS flow. Alternatively, the user plane network element may configure the second timer by using a QoS flow as a granularity by default.

It may be further understood that, in Manner 2, the first data size reported by the session management network element or the user plane network element may also be an increment or a total quantity. A principle thereof is similar to that in the foregoing Manner 1, and reference may be made for understanding. Details are not described again.

For the foregoing Manner 3, when receiving the second indication information, the session management network element reports the data size of the buffered service data of the terminal or triggers the user plane network element to report the data size.

Specifically, the session management network element may determine, based on whether the service data of the terminal is buffered locally or on the user plane network element, whether to report the data size of the service data by the session management network element or trigger the user plane network element to report the data size of the service data. Details are separately described below.

Case 21: The session management network element buffers the service data of the terminal.

The session management network element may trigger, based on the received buffered data size threshold from the access and mobility management network element, comparison between the data size of the buffered service data of the terminal and the buffered data size threshold. Alternatively, if the session management network element is locally preconfigured with the buffered data size threshold, the session management network element may trigger, based on the received second indication information, comparison between the data size of the buffered service data of the terminal and the buffered data size threshold. In addition, after the triggering, the session management network element may further periodically compare the data size of the buffered service data of the terminal with the buffered data size threshold, or may compare a data size of latest buffered service data of the terminal with the buffered data size threshold when the buffered service data of the terminal is updated. If the data size of the buffered service data of the terminal is less than the buffered data size threshold, the session management network element does not report the data size of the buffered service data of the terminal. If the data size of the buffered service data of the terminal is the first data size, that is, reaches (for example, is greater than or equal to) the buffered data size threshold, the session management network element may send the first data size, for example, an Namf_MT service message that carries the first data size, to the access and mobility management network element. Optionally, the Namf_MT service message may further include the identifier of the first QoS flow, to indicate that the first data size is the data size corresponding to the first QoS flow.

It may be understood that the buffered data size threshold may be configured at a granularity of a QoS flow, and buffered data size thresholds corresponding to QoS flows may be different, so that the session management network element may decouple or asynchronously report data sizes corresponding to these QoS flows. For example, if a data size corresponding to a specific QoS flow exceeds a buffered data size threshold corresponding to the QoS flow, the session management network element may report the data size corresponding to the QoS flow. The session management network element does not report a data size corresponding to a QoS flow whose data size does not exceed a buffered data size threshold.

Case 22: The user plane network element buffers the service data of the terminal.

The session management network element may also send the third information to the user plane network element of the terminal based on the first information. A specific implementation is similar to that in the foregoing Manner 1, and reference may be made for understanding. However, a difference lies in that the third information may include fifth indication information, and the fifth indication information may indicate the user plane network element to report the data size of the buffered service data of the terminal when the data size of the buffered service data of the terminal reaches the buffered data size threshold. The fifth indication information and the second indication information may be same information. In other words, the session management network element may forward the first information (including the second indication information) to the user plane network element. Alternatively, the fifth indication information and the second indication information may be different information. In other words, the session management network element may send the fifth indication information to the user plane network element based on the second indication information. For example, the session management network element may convert the second indication information into an information element format that can be identified by the user plane network element, to obtain the fifth indication information, and then send, to the user plane network element, the third information that carries the fifth indication information.

Optionally, the session management network element may further send the buffered data size threshold to the user plane network element. The buffered data size threshold may also be carried in the third information, so that the buffered data size threshold and the fifth indication information are carried in the same information, to reduce communication overheads. However, this is not limited. The buffered data size threshold and the fifth indication information may alternatively be separately carried in different information to implement decoupling, so that information element transfer is more flexible. In addition, that the session management network element sends the buffered data size threshold to the user plane network element is an example. For example, if the user plane network element is locally preconfigured or predefined with the buffered data size threshold, the session management network element may not send the buffered data size threshold to the user plane network element.

It may be understood that, for the user plane network element, the buffered data size threshold may also be configured at a granularity of a QoS flow. For example, the buffered data size threshold corresponds to the identifier of the first QoS flow in the third information. In this case, the buffered data size threshold is configured for the one or more first QoS flows. In this case, when a data size corresponding to a specific QoS flow exceeds the buffered data size threshold corresponding to the QoS flow, the user plane network element reports the data size corresponding to the QoS flow. Alternatively, the user plane network element may configure the buffered data size threshold by using a QoS flow as a granularity by default. In addition, values of buffered data size thresholds corresponding to QoS flows may be the same or may be different.

The user plane network element may trigger, based on the received buffered data size threshold from the session management network element, comparison between the data size of the buffered service data of the terminal and the buffered data size threshold. Alternatively, if the user plane network element is locally preconfigured with the buffered data size threshold, the user plane network element may trigger, based on the received fifth indication information, comparison between the data size of the buffered service data of the terminal and the buffered data size threshold. In addition, after the triggering, the user plane network element may further periodically compare the data size of the buffered service data of the terminal with the buffered data size threshold, or may compare a data size of latest buffered service data of the terminal with the buffered data size threshold when the buffered service data of the terminal is updated. If the data size of the buffered service data of the terminal is less than the buffered data size threshold, the user plane network element does not report the data size of the buffered service data of the terminal. If the data size of the buffered service data of the terminal is the first data size, that is, reaches (for example, is greater than or equal to) the buffered data size threshold, the user plane network element may send the first data size, for example, a second N4 session modification message that carries the first data size, to the session management network element. Optionally, the second N4 session modification message may further include the identifier of the first QoS flow, to indicate that the first data size is the data size corresponding to the first QoS flow. In this way, the session management network element may also send the first data size, for example, an Namf service message that carries the first data size, to the access and mobility management network element. Optionally, the Namf_MT service message may further include the identifier of the first QoS flow, to indicate that the first data size is the data size corresponding to the first QoS flow.

It may be understood that the buffered data size threshold may be configured at a granularity of a QoS flow, and buffered data size thresholds corresponding to QoS flows may be different, so that the user plane network element may decouple or asynchronously report data sizes corresponding to these QoS flows. For example, if a data size corresponding to a specific QoS flow exceeds a buffered data size threshold corresponding to the QoS flow, the user plane network element may report the data size corresponding to the QoS flow. The user plane network element does not report a data size corresponding to a QoS flow whose data size does not exceed the buffered data size threshold.

For the foregoing Manner 4, when receiving the third indication information, the session management network element reports the data size of the buffered service data of the terminal or triggers the user plane network element to report the data size.

Specifically, the session management network element may choose, based on whether the service data of the terminal is buffered locally or on the user plane network element, whether to report the data size by the session management network element or report the data size by the user plane network element. Details are separately described below.

Case 31: The session management network element buffers the buffered service data of the terminal.

The session management network element may trigger, based on the third indication information, reporting of the data size of the service data of the terminal each time the service data of the terminal is received. The session management network element may determine, based on continuity of received data packets, whether current receiving is completed. If the receiving is completed, a data size of service data of the terminal received this time is reported. If the receiving is not completed, the session management network element continues waiting for receiving until the receiving is completed. For example, if an interval between receiving data packets of every two pieces of adjacent data by the session management network element is less than an interval threshold, it is considered that the data packets of the two pieces of adjacent data are continuously received. Based on this, the session management network element determines that N data packets are continuously received, where N is an integer greater than 1. If the session management network element does not receive a new data packet after receiving an N^{th} piece of data and waiting for an interval longer than the interval threshold, the session management network element determines that the current receiving is completed. When the current receiving is completed, the session management network element may send the data size received this time to the access and mobility management network element. Optionally, the identifier of the first QoS flow may further be included, to indicate that the data size received this time is a data size corresponding to the first QoS flow. Before the state of the terminal changes to the reachable state, the session management network element may report at least one data size, and the first data size may be a total quantity of the at least one reported data size.

It may be understood that the session management network element may perform reporting at a granularity of a QoS flow. For example, if the session management network element determines that data received this time is data corresponding to specific QoS flows in the one or more first QoS flows, the session management network element reports data sizes corresponding to the QoS flows. The session management network element does not report a data size corresponding to a QoS flow whose data is not received this time.

Case 32: The user plane network element buffers the service data of the terminal.

The session management network element may also send, based on the first information, the third information to the user plane network element corresponding to the terminal. A specific implementation is similar to that in the foregoing Manner 1, and reference may be made for understanding. However, a difference lies in that the third information may include sixth indication information. The sixth indication information may indicate the user plane network element to report the data size of the service data of the terminal each time the service data of the terminal is received and when the terminal is in the unreachable state in the inactive state. The sixth indication information and the third indication information may be same information. In other words, the session management network element may forward the first information (including the third indication information) to the user plane network element. Alternatively, the sixth indication information and the third indication information may be different information. In other words, the session management network element may send the sixth indication information to the user plane network element based on the third indication information. For example, the session management network element may convert the third indication information into an information element format that can be identified by the user plane network element, to obtain the sixth indication information, and then send, to the user plane network element, the third information that carries the sixth indication information.

The user plane network element may trigger, based on the sixth indication information received from the session management network element, reporting of the data size of the service data of the terminal each time the service data of the terminal is received. The user plane network element may also determine, based on continuity of received data packets, whether current receiving is completed. A specific implementation is similar to that of the foregoing session management network element, and reference may be made for understanding. When the current receiving is completed, the user plane network element sends, to the session management network element, a data size of service data of the terminal that is received this time, for example, a data arrival notification message that carries the data size. Optionally, the data arrival notification message may further include the identifier of the first QoS flow, to indicate that the data size received this time is a data size corresponding to the first QoS flow. Correspondingly, the session management network element may continue to report, to the access and mobility management network element, the data size received by the user plane network element this time, for example, an MT request message that carries the data size. Optionally, the MT request message may further carry the identifier of the first QoS flow, to indicate that the data size received this time is the data size corresponding to the first QoS flow. Similarly, before the state of the terminal changes to the reachable state, the user plane network element and the session management network element may report at least one data size, and the first data size may be a total quantity of the at least one reported data size.

It may be understood that the user plane network element may alternatively perform reporting at a granularity of a QoS flow. For example, if the user plane network element determines that data received this time is data corresponding to specific QoS flows in the one or more first QoS flows, the user plane network element reports data sizes corresponding to the QoS flows. The user plane network element does not report a data size corresponding to a QoS flow whose data is not received this time.

It may be further understood that the session management network element may report, in an MT procedure, for example, the MT request message, a data size received for the first time. Then, the session management network element may still report, in the MT procedure, for example, the MT request message or another message like an Namf service message, a data size received after the reporting. This is not specifically limited.

It may be further understood that the session management network element may learn, through preconfiguration or predefinition in a protocol, whether the service data of the terminal is buffered locally or on the user plane network element. A specific implementation is not limited.

S303: The access and mobility management network element sends a second data size to the access network device of the terminal based on the first data size.

The second data size may be the same as or different from the first data size. Details are separately described below.

In a possible manner, the second data size is different from the first data size. For example, when the first QoS flow includes the QoS flow that supports the SDT DRB and the QoS flow that does not support the SDT DRB, the first data size includes the data size corresponding to the first QoS flow, and the second data size may be a data size corresponding to the QoS flow that supports the SDT DRB in the first QoS flow. It may be understood as that the access and mobility management network element sends, to the access network device based on the first data size, the data size corresponding to the QoS flow that supports the SDT DRB, to avoid communication redundancy.

In another possible manner, the second data size is the same as the first data size. For example, when the first QoS flow includes the QoS flow that supports the SDT DRB and the QoS flow that does not support the SDT DRB, the access and mobility management network element may directly send the first data size to the access network device. Further, when performing MT SDT decision, the access network device not only considers a data size corresponding to the QoS flow that supports the SDT DRB, but also considers a data size corresponding to the QoS flow that does not support the SDT DRB. For another example, when the first QoS flow is the QoS flow that supports the SDT DRB, the access and mobility management network element may directly send the first data size to the access network device.

Optionally, regardless of whether the first data size or the second data size is reported, the access and mobility management network element may further report an identifier of a corresponding QoS flow, to indicate that the data size is a data size corresponding to the QoS flow.

It may be understood that an implementation of S303 is an example, but is not limited. For example, when the second data size is different from the first data size, the user plane network element may send the second data size to the session management network element based on the first data size, or the session management network element may send the second data size to the access and mobility management network element based on the first data size. In this way, the access and mobility management network element may also directly send the second data size to the access network device.

In conclusion, the access and mobility management network element may actively indicate the session management network element to report the data size of the service data, for example, the first data size of the service data buffered by the network when the terminal is in the inactive state, so that the access and mobility management network element can notify the access network device of a corresponding data size, for example, the second data size, based on the data size of the service data, to help the access network device perform more accurate MT SDT decision.

Optionally, with reference to the foregoing method, before S301, the method may further include the following step.

S300: The access and mobility management network element receives second information from the access network device.

The second information may be carried in the N2 message or any other possible message. The second information may include information about the first QoS flow, so that the access and mobility management network element may send the first information to the session management network element based on the information about the first QoS flow. The information about the first QoS flow may include at least one of the following: the identifier of the first QoS flow, a PDU session identifier, SDT indication information, SDT enabling information, or a data size threshold of the SDT DRB.

The identifier of the first QoS flow may indicate the first QoS flow. Further, the access and mobility management network element may send, to the session management network element based on the identifier of the first QoS flow in the information about the first QoS flow, the first information that carries the identifier of the first QoS flow.

It may be understood that when the second information does not include the identifier of the first QoS flow, the access and mobility management network element may obtain and report, by default, the data sizes of the buffered service data corresponding to all the QoS flows of the terminal, or buffered data sizes corresponding to all QoS flows with buffered downlink data or downlink data arrival.

It may be understood that the access and mobility management network element may obtain and report, based on protocol predefinition, data sizes of buffered service data corresponding to specific QoS flows of the terminal, or may negotiate with the access and mobility management network element and the access network device in advance to report data sizes of buffered service data corresponding to specific QoS flows of the terminal. Further, after receiving the second information, the access and mobility management network element reports, by default, the data sizes of the buffered service data corresponding to the QoS flows.

The PDU session identifier may be used to identify a PDU session corresponding to the first QoS flow, so that the access and mobility management network element determines a session management network element corresponding to the PDU session, to send the first information to the session management network element. It may be understood that the PDU session identifier may alternatively be an optional information element in the information about the first QoS flow. For example, the access and mobility management network element sends the first information to the session management network element by default without an indication of the PDU session identifier.

The SDT indication information may indicate DRBs that correspond to specific QoS flows in the first QoS flow and that are configured with SDT DRBs, so that the access and mobility management network element determines whether to report only a data size of buffered service data corresponding to the QoS flows that support the SDT DRBs. For example, the SDT indication information corresponds to identifiers of the QoS flows that support the SDT DRBs and that are in the first QoS flow, to indicate that these corresponding QoS flows support the SDT DRBs. It may be understood that the SDT indication information is an optional information element in the information about the first QoS flow, and the QoS flow that supports the SDT DRB may alternatively be implicitly indicated in another manner. For example, the first QoS flow includes five QoS flows, and by default, an x^{th} to a y^{th} QoS flows in an identifier list including identifiers of the five QoS flows support SDT DRBs.

The SDT enabling information may indicate the access and mobility management network element to report the data size of the buffered service data of the terminal. For example, an information element meaning of the SDT enabling information may be indicating that the terminal currently in the inactive state is configured with the SDT DRB, to implicitly indicate, through indication of configuration of the SDT DRB, the access and mobility management network element to report the data size of the buffered service data of the terminal. Alternatively, an information element meaning of the SDT enabling information may be indicating the access and mobility management network element to report the data size of the buffered service data of the terminal.

In other words, the SDT enabling information is information whose indication granularity is coarser than that of the SDT indication information. If the second information carries the SDT enabling information, it indicates that the access and mobility management network element reports the data size of the buffered service data of the terminal without distinguishing whether a QoS flow supports an SDT DRB. However, if the second information carries the SDT indication information, it indicates that the access and mobility management network element may report only a data size that corresponds to the QoS flow supporting the SDT DRB and that is of the buffered service data of the terminal.

The data size threshold of the SDT DRB may indicate a threshold of a data size or an upper limit of a size of data that can be carried by the SDT DRB of the access network device, to help the access and mobility management network element determine whether the access and mobility management network element is to report the data size. For example, when the first QoS flow supports the SDT DRB, the access and mobility management network element obtains, in the MT procedure, a data size of data that is buffered by the network and that is reported by the session management network element, for example, the foregoing third data size. In this case, the access and mobility management network element may determine whether the third data size is less than the data size threshold. If the third data size is less than the data size threshold, the access and mobility management network element sends the first information to the session management network element. In other words, when the data size of the data buffered by the network is less than the upper limit of the size of the data that can be carried by the SDT DRB, the access and mobility management network element makes the network continue buffering and report a data size; or when the data size of the data buffered by the network is greater than or equal to the upper limit of the size of the data that can be carried by the SDT DRB, the access network device is triggered to restore the terminal to the connected state.

Optionally, QoS flows corresponding to SDT DRBs may have a same data size threshold of the SDT DRB or different data size thresholds of the SDT DRB. This is not limited.

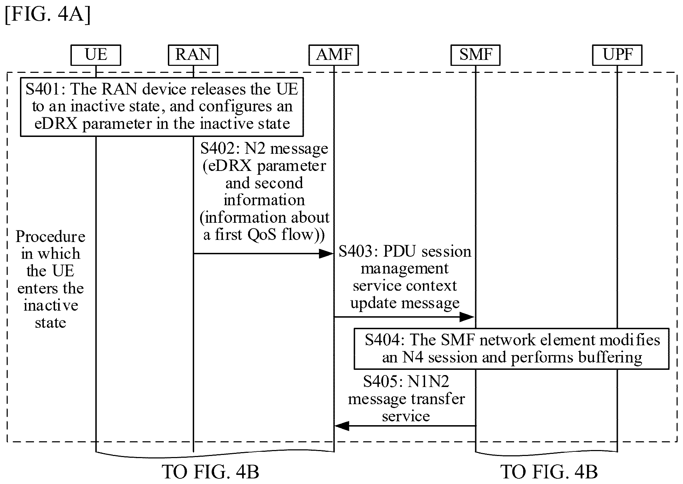

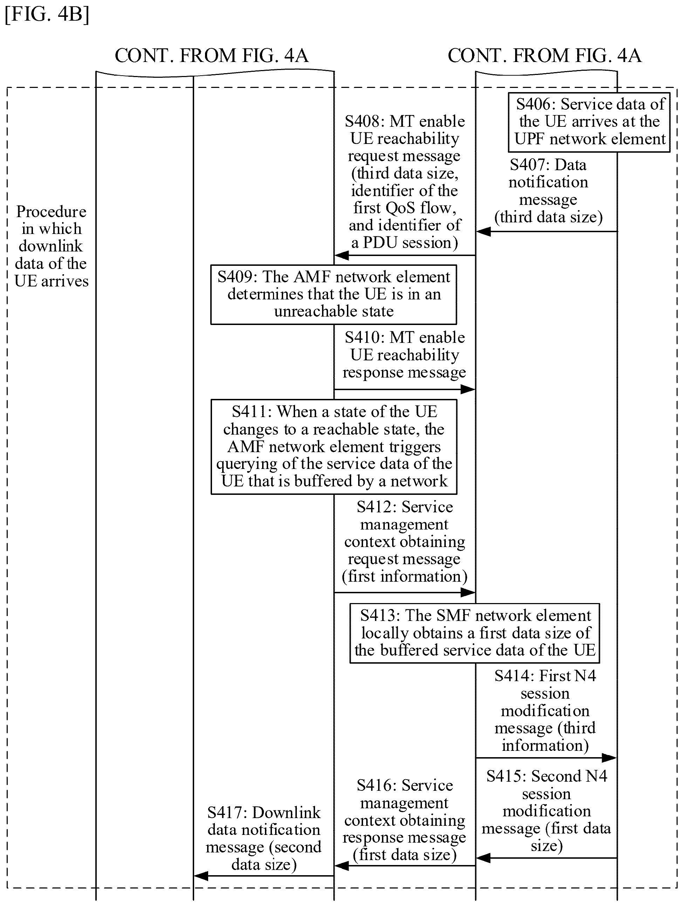

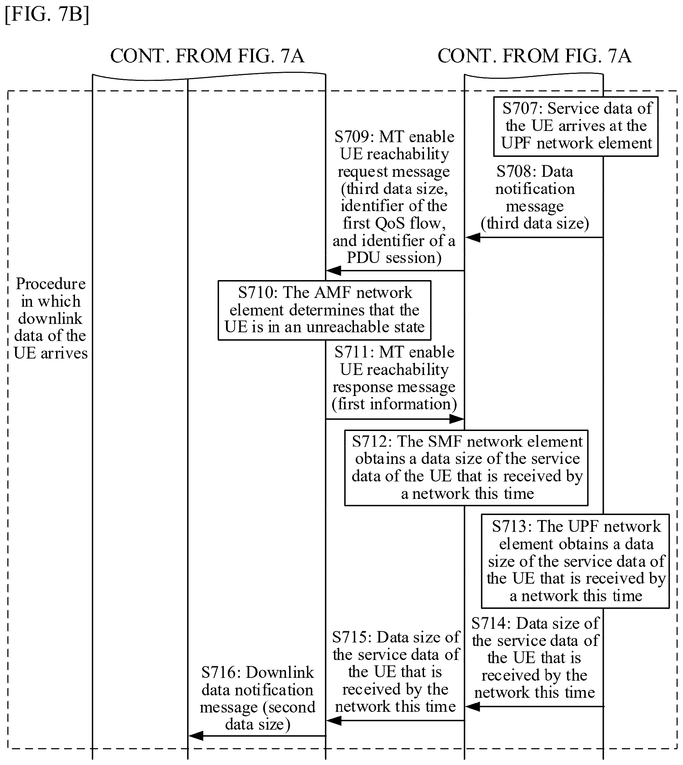

The foregoing describes an overall procedure of the communication method provided in embodiments of this application with reference to FIG. 3. The following describes a specific procedure of the communication method in each scenario with reference to FIG. 4A and FIG. 4B to FIG. 7A and FIG. 7B.

FIG. 4A and FIG. 4B are a schematic flowchart 2 of a communication method according to an embodiment of this application. The communication method is applicable to the foregoing communication system, and mainly relates to interaction between a RAN device (for example, the foregoing access network device), an AMF network element (for example, the foregoing access and mobility management network element), an SMF network element (for example, the foregoing session management network element), and a UPF network element (for example, the foregoing user plane network element). In this scenario, when UE is to be reachable, the AMF network element may indicate the SMF network element to report a data size of buffered service data of the UE.

As shown in FIG. 4A and FIG. 4B, a procedure of the communication method is as follows.

S401: A RAN device releases UE to an inactive state, and configures an eDRX parameter in the inactive state.

The eDRX parameter may be a long eDRX parameter, that is, an eDRX cycle is greater than 10.24s, to indicate time at which the UE in the inactive state sleeps and/or time at which the UE in the inactive state can be woken up. Optionally, the RAN device may further configure an SDT DRB/SRB for some DRBs/SRBs, that is, the RAN device specifies specific DRBs/SRBs whose data can be transmitted through SDT. In addition, the specific DRBs/SRBs selected by the RAN device to configure the SDT DRB/SRB are not limited in this embodiment of this application. For example, the RAN device may select a DRB/SRB based on resource usage of the RAN device.

S402: The RAN device sends an N2 message to an AMF network element.

The N2 message may include the eDRX parameter, and the eDRX parameter is an eDRX parameter used by the UE to enter the RRC inactive state.

Optionally, information about a first QoS flow may be further included (refer to related descriptions of S300). In other words, after the UE is released to the inactive state, the RAN device may send the eDRX parameter in the inactive state and the information about the first QoS flow to the AMF network element, so that the AMF network element can perform reachability detection on the UE, and report a data size of data that corresponds to the first QoS flow and that is buffered by a network.

Optionally, SDT enabling information may be further included, to indicate that the terminal device currently in the inactive state is configured with an SDT radio bearer resource, or indicating that an access and mobility management network provides a service data size buffered by the network when the terminal device in the inactive state is in an unreachable state. The buffered data size is provided at a granularity of a QoS flow.

S403: The AMF network element sends a PDU session management service context update (Nsmf_PDUSession_update SMContext) message to an SMF network element.

S404: The SMF network element modifies an N4 session and performs buffering.

S405: The SMF network element sends an N1N2 message transfer service (Namf_Communication_N1N2Message Transfer service) to the AMF network element.

S406: The service data of the UE arrives at a UPF network element.

The service data of the UE may be the data corresponding to the first QoS flow, or data to be carried on the first QoS flow. For descriptions of the first QoS flow, refer to related descriptions of S301. Details are not described herein again.

S407: The UPF network element sends a data notification (data notification) message to the SMF network element.

The data notification message may carry a data size of the service data of the UE, for example, the foregoing third data size.

S408: The SMF network element sends an MT enable UE reachability request message to the AMF network element.

The MT enable UE reachability request message may include the third data size, an identifier of the first QoS flow, and an identifier of a PDU session in which the first QoS flow is located, so that the AMF network element queries for reachability of the UE.

S409: The AMF network element determines that the UE is in the unreachable state.

The AMF network element may find the corresponding UE based on the identifier of the first QoS flow and the identifier of the PDU session in which the first QoS flow is located. The AMF network element may query for the reachability of the UE based on the eDRX parameter of the UE, and determine that the UE is in the unreachable state.

S410: The AMF network element sends an MT enable UE reachability response (Namf_MT_EnableUERechability response) message to the SMF network element.

When the UE is in the unreachable state, the MT enable UE reachability response message may indicate the AMF network element to reject a request of the SMF network element.

For example, the MT enable UE reachability response message may include a rejection indication, so that the AMF network element rejects the SMF network element because the UE is in the unreachable state. The MT enable UE reachability response message may further include a maximum wait delay. The maximum wait delay may be determined by the AMF network element based on the eDRX parameter of the UE, and indicates a time length for which the UE waits to be reachable. The SMF network element may determine, based on the maximum wait delay, to buffer previously received downlink data. For example, the SMF network element may indicate the UPF network element to buffer the downlink data, or may indicate the UPF network element to send the downlink data to the SMF network element, and the SMF network element buffers the downlink data.

Optionally, if the first QoS flow supports an SDT DRB, the AMF network element may further determine whether the third data size is less than a data size threshold of the SDT DRB. The data size threshold of the SDT DRB may be obtained by the AMF network element from the information about the first QoS flow, or may be obtained by the AMF network element from another network element like a UDM network element, or may be locally configured in the AMF network element. If the third data size is less than the data size threshold of the SDT DRB, the AMF network element sends the MT enable UE reachability response message to the SMF network element. If the third data size is greater than or equal to the data size threshold of the SDT DRB, the AMF network element may trigger the RAN device to restore the UE to a connected mode. For specific implementation, refer to related descriptions of S300. Details are not described herein again.

S411: When a state of the UE changes to a reachable state, the AMF network element triggers querying of the service data of the UE that is buffered by the network.

That the state of the UE changes to the reachable state may be understood as that the state of the UE is to change to the reachable state. For example, the AMF network element determines, based on the eDRX parameter of the UE, that the UE is to be reachable. In other words, the AMF network element is to trigger the RAN device to page the UE, and the AMF network element determines to query for the service data of the UE that is buffered by the network. In this case, the AMF network element may determine, based on the PDU session identifier in the information about the first QoS flow, an SMF network element corresponding to the PDU session, determine to query the SMF network element for the service data of the UE that is buffered by the network, and perform S412.

For example, the PDU session identifier includes a PDU session #1, a PDU session #2, and a PDU session #3, the PDU session #1 corresponds to an SMF network element #1, the PDU session #2 and the PDU session #3 correspond to an SMF network element #2, and the AMF network element determines to separately query the SMF network element #1 and the SMF network element #2 for the service data of the UE that is buffered by the network.

Optionally, if the information about the first QoS flow includes SDT indication information, the AMF network element may further choose, based on the SDT indication information, to query a data size corresponding to a QoS flow that supports the SDT DRB in the first QoS flow, and perform S412. Alternatively, the AMF network element may still query for the data size corresponding to the first QoS flow without choosing.

For ease of understanding, the following uses an example in which the AMF network element queries for the data size corresponding to the first QoS flow for description.

S412: The AMF network element sends a service management context obtaining request (Nsmf_SMContext request) message to the SMF network element.

When the UE is to be reachable or the AMF network element is about to trigger the RAN device to page the UE, the AMF network element may send the service management context obtaining request message to the SMF network element. The service management context obtaining request message may include first information, and is used to trigger the SMF network element to report the data size of the buffered service data of the UE, for example, the data size corresponding to the first QoS flow. For specific implementation, refer to related descriptions of Manner 1 in S301. Details are not described herein again.

S413: The SMF network element locally obtains a first data size of the buffered service data of the UE.

If the service data of the UE is buffered by the SMF network element, the SMF network element performs S413.

S414: The SMF network element sends a first N4 session modification (N4_Session modification) message to the UPF network element.

The first N4 session modification message may include third information, used to trigger the UPF network element to report the data size of the buffered service data of the UE.

S415: The UPF network element sends a second N4 session modification message to the SMF network element.

The second N4 session modification message may include the first data size of the buffered service data of the UE.

S416: The SMF network element sends a service management context obtaining response (Nsmf_SMContext response) message to the AMF network element.

The service management context obtaining response message may include the first data size.

It may be understood that for specific implementations of S413 to S416, refer to related descriptions of Manner 1 in S302. Details are not described herein again.

S417: The AMF network element sends a downlink data notification (DL data notification) message to the RAN device.

The downlink data notification message may include a second data size, and the second data size may be the same as or different from the first data size. For specific implementation, refer to related descriptions of S303. Details are not described herein again.

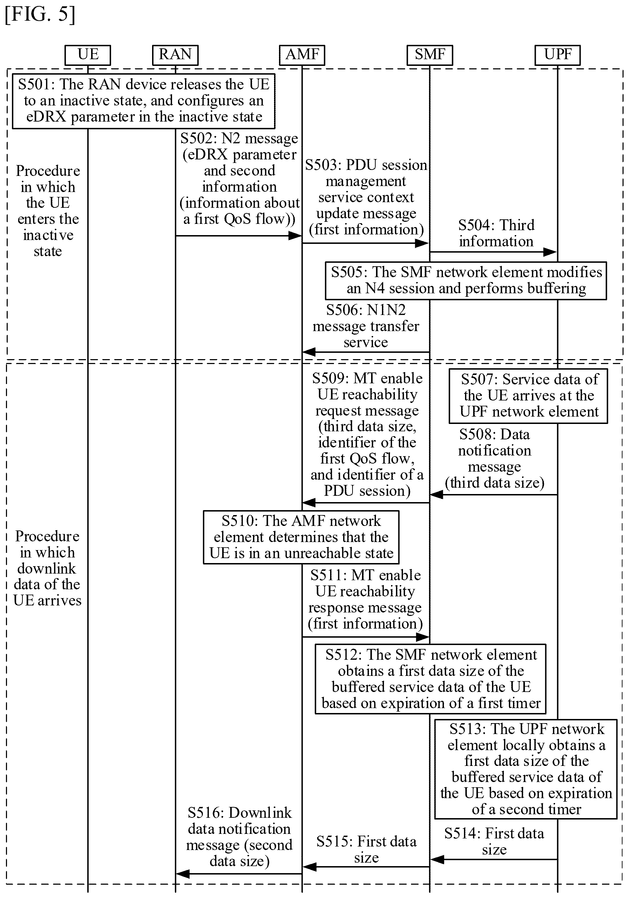

FIG. 5 is a schematic flowchart 3 of a communication method according to an embodiment of this application. The communication method is applicable to the foregoing communication system, and mainly relates to interaction between a RAN device (for example, the foregoing access network device), an AMF network element (for example, the foregoing access and mobility management network element), an SMF network element (for example, the foregoing session management network element), and a UPF network element (for example, the foregoing user plane network element). In this scenario, the AMF network element may trigger the SMF network element/UPF network element to start a timer, to report a data size of buffered service data of the UE when the timer expires, for example, when the UE is to be reachable.

As shown in FIG. 5, a procedure of the communication method is as follows.

S501: A RAN device releases UE to an inactive state, and configures an eDRX parameter in the inactive state.

S502: The RAN device sends an N2 message to an AMF network element.

For S501 and S502, refer to related descriptions of S401 and S402. Details are not described herein again.

S503: The AMF network element sends a PDU session context update message to an SMF network element.

Optionally, the PDU session context update message may carry first information. The first information may include first indication information, to indicate the SMF network element to report a data size of service data of the UE when a first timer expires. Optionally, the first information may further include duration of the first timer. The duration may cause the first timer to expire when the UE is to be reachable. For specific implementation, refer to related descriptions of Manner 2 in S301. Details are not described herein again. Optionally, the duration of the first timer may reuse a maximum waiting delay.

S504: The SMF network element sends third information to a UPF network element.

Optionally, the third information may include fourth indication information, to indicate the UPF network element to report the data size of the service data of the UE when a second timer expires. Optionally, the third information may further include duration of the second timer. The duration may cause the second timer to expire when the UE is to be reachable. For specific implementation, refer to related descriptions of Manner 2 in S302. Details are not described herein again.

It may be understood that S504 is an optional step. If the service data of the UE is buffered by the UPF network element, the SMF network element performs S504. If the service data of the UE is not buffered by the UPF network element, S504 is not performed.

S505: The SMF network element modifies an N4 session and performs buffering.

S506: The SMF network element sends an N1N2 message transfer service to the AMF network element.

S507: The service data of the UE arrives at the UPF network element.

S508: The UPF network element sends a data notification message to the SMF network element.

S509: The SMF network element sends an MT enable UE reachability request message to the AMF network element.

S510: The AMF network element determines that the UE is in an unreachable state.

For S507 to S510, refer to related descriptions of S404 to S409. Details are not described herein again.

S511: The AMF network element sends an MT enable UE reachability response message to the SMF network element.

The MT enable UE reachability response message may carry the information described in S410. When the PDU session context update message in S503 does not carry the first information, the MT enable UE reachability response message may further carry the first information. In this case, S504 may be performed after S511. That is, performing S504 after S503 and performing S504 after S511 may be parallel optional implementations.

It may be further understood that for specific implementation of S511, refer to related descriptions of Manner 2 in S302. Details are not described herein again.

S512: The SMF network element obtains a first data size of the buffered service data of the UE based on expiration of the first timer.

The SMF network element may locally obtain the first data size of the buffered service data of the UE, or may obtain the first data size of the buffered service data of the UE from the UPF network element.

S513: The UPF network element locally obtains a first data size of the buffered service data of the UE based on expiration of the second timer.

S514: The UPF network element sends the first data size to the SMF network element.

S515: The SMF network element sends the first data size to the AMF network element.

It may be understood that S512 and S515 are in an "or" execution relationship with S513 to S515. For specific implementations of S512 to S515, refer to related descriptions of Manner 2 in S302. Details are not described herein again.

S516: The AMF network element sends a downlink data notification message to the RAN device.

The downlink data notification message may include a second data size. For specific implementation, refer to related descriptions of S303. Details are not described herein again.

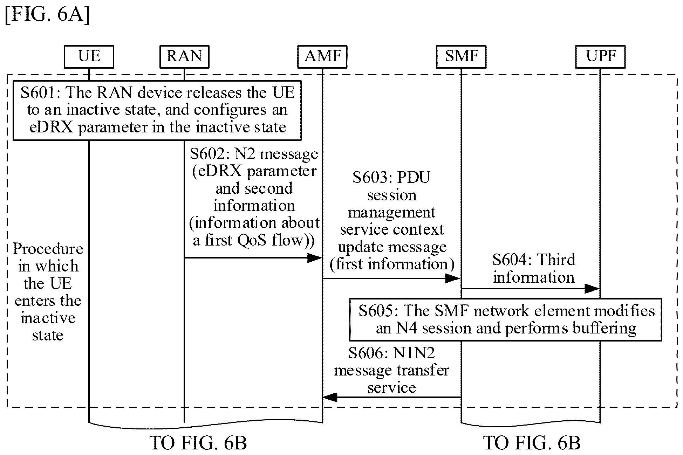

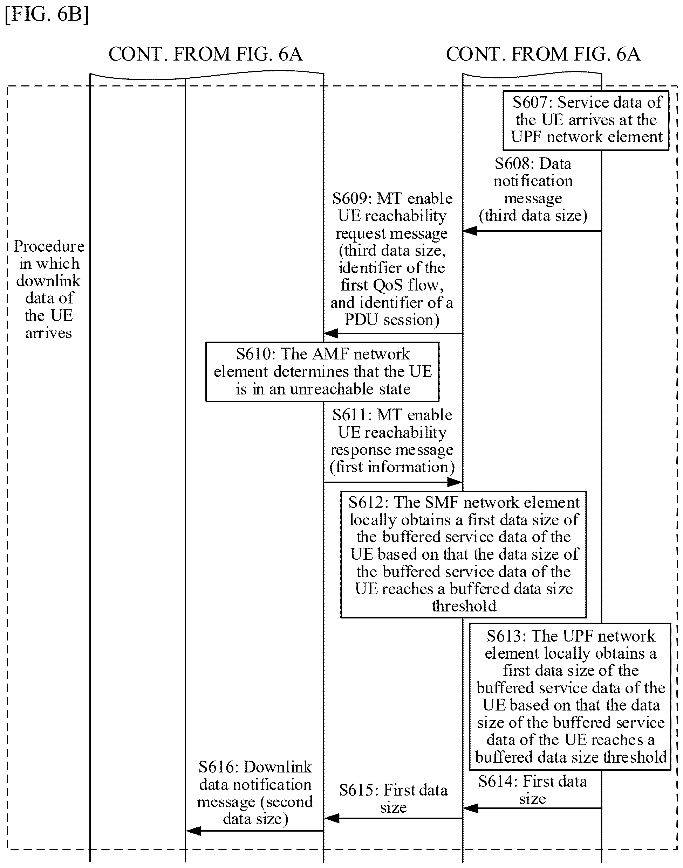

FIG. 6A and FIG. 6B are a schematic flowchart 4 of a communication method according to an embodiment of this application. The communication method is applicable to the foregoing communication system, and mainly relates to interaction between a RAN device (for example, the foregoing access network device), an AMF network element (for example, the foregoing access and mobility management network element), an SMF network element (for example, the foregoing session management network element), and a UPF network element (for example, the foregoing user plane network element). In this scenario, the AMF network element delivers a buffered data size threshold to the SMF network element/UPF network element, so that the SMF network element/UPF network element reports a data size when the data size of buffered service data of UE reaches the buffered data size threshold.

As shown in FIG. 6A and FIG. 6B, a procedure of the communication method is as follows.

S601: A RAN device releases UE to an inactive state, and configures an eDRX parameter in the inactive state.

S602: The RAN device sends an N2 message to an AMF network element.

For S601 and S602, refer to related descriptions of S401 and S402. Details are not described herein again.

S603: The AMF network element sends a PDU session context update message to an SMF network element.

The PDU session context update message may carry first information. The first information may include second indication information, to indicate the SMF network element to report a data size of buffered service data of the UE when the data size of the buffered service data of the UE reaches a buffered data size threshold. Optionally, the first information may further include the buffered data size threshold. For specific implementation, refer to related descriptions of Manner 3 in S301. Details are not described herein again.

S604: The SMF network element sends third information to a UPF network element.

The third information may include fifth indication information, to indicate the UPF network element to report the data size of the buffered service data of the UE when the data size of the buffered service data of the UE reaches the buffered data size threshold. Optionally, the third information may further include the buffered data size threshold. For specific implementation, refer to related descriptions of Manner 3 in S302. Details are not described herein again.

It may be understood that S604 is an optional step. If the service data of the UE is buffered by the UPF network element, the SMF network element performs S604. If the service data of the UE is not buffered by the UPF network element, S604 is not performed.

S605: The SMF network element modifies an N4 session and performs buffering.

S606: The SMF network element sends an N1N2 message transfer service to the AMF network element.

S607: The service data of the UE arrives at the UPF network element.

S608: The UPF network element sends a data notification message to the SMF network element.

S609: The SMF network element sends an MT enable UE reachability request message to the AMF network element.

S610: The AMF network element determines that the UE is in an unreachable state.

For S607 to S610, refer to related descriptions of S404 to S409. Details are not described herein again.

S611: The AMF network element sends an MT enable UE reachability response message to the SMF network element.

The MT enable UE reachability response message may carry the information described in S410. When the PDU session context update message in S603 does not carry the first information, the MT enable UE reachability response message may further carry the first information. In this case, S604 may be performed after S611. That is, performing S604 after S603 and performing S604 after S611 may be parallel optional implementations.

It may be understood that for specific implementation of S611, refer to related descriptions of Manner 3 in S302. Details are not described herein again.

S612: The SMF network element locally obtains a first data size of the buffered service data of the UE based on that the data size of the buffered service data of the UE reaches the buffered data size threshold.

S613: The UPF network element locally obtains a first data size of the buffered service data of the UE based on that the data size of the buffered service data of the UE reaches the buffered data size threshold.

S614: The UPF network element sends the first data size to the SMF network element.

S615: The SMF network element sends the first data size to the AMF network element.

It may be understood that S612 and S615 are in an "or" execution relationship with S613 to S615. For specific implementations of S612 to S615, refer to related descriptions of Manner 3 in S302. Details are not described herein again.

S616: The AMF network element sends a downlink data notification message to the RAN device.

The downlink data notification message may include a second data size. For specific implementation, refer to related descriptions of S303. Details are not described herein again.

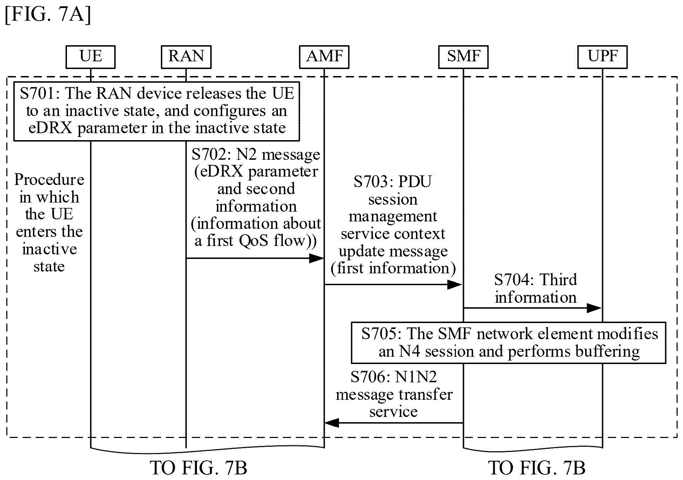

FIG. 7A and FIG. 7B are a schematic flowchart 5 of a communication method according to an embodiment of this application. The communication method is applicable to the foregoing communication system, and mainly relates to interaction between a RAN device (for example, the foregoing access network device), an AMF network element (for example, the foregoing access and mobility management network element), an SMF network element (for example, the foregoing session management network element), and a UPF network element (for example, the foregoing user plane network element). In this scenario, the AMF network element may indicate the SMF network element/UPF network element to report a corresponding data size each time the SMF network element/UPF network element receives and buffers service data of UE.

As shown in FIG. 7A and FIG. 7B, a procedure of the communication method is as follows.

S701: A RAN device releases UE to an inactive state, and configures an eDRX parameter in the inactive state.

S702: The RAN device sends an N2 message to an AMF network element.

For S701 and S702, refer to related descriptions of S401 and S402. Details are not described herein again.

S703: The AMF network element sends a PDU session context update message to an SMF network element.

The PDU session context update message may carry first information. The first information may include third indication information, to indicate the SMF network element to report a data size of service data of the UE each time a network receives the service data of the UE and when a terminal is in an unreachable state in the inactive state. For specific implementation, refer to related descriptions of Manner 4 in S301. Details are not described herein again.

S704: The SMF network element sends third information to a UPF network element.

The third information may include sixth indication information, to indicate the UPF network element to report the data size of the service data of the UE each time the network receives the service data of the UE and when the terminal is in the unreachable state in the inactive state. For specific implementation, refer to related descriptions of Manner 4 in S302. Details are not described herein again.

It may be understood that S704 is an optional step. If the service data of the UE is buffered by the UPF network element, the SMF network element performs S704. If the service data of the UE is not buffered by the UPF network element, S704 is not performed.

S705: The SMF network element modifies an N4 session and performs buffering.

S706: The SMF network element sends an N1N2 message transfer service to the AMF network element.

S707: The service data of the UE arrives at the UPF network element.

S708: The UPF network element sends a data notification message to the SMF network element.

S709: The SMF network element sends an MT enable UE reachability request message to the AMF network element.

S710: The AMF network element determines that the UE is in the unreachable state.

For S707 to S710, refer to related descriptions of S404 to S409. Details are not described herein again.

S711: The AMF network element sends an MT enable UE reachability response message to the SMF network element.

The MT enable UE reachability response message may carry the information described in S410. When the PDU session context update message in S703 does not carry the first information, the MT enable UE reachability response message may further carry the first information. In this case, S704 may be performed after S711. That is, performing S704 after S703 and performing S704 after S711 may be parallel optional implementations.

It may be understood that for specific implementation of S711, refer to related descriptions of Manner 4 in S302. Details are not described herein again.

S712: The SMF network element obtains a data size of the service data of the UE that is received by the network this time.

S713: The UPF network element obtains a data size of the service data of the UE that is received by the network this time.

S714: The UPF network element sends, to the SMF network element, the data size of the service data of the UE that is received by the network this time.

S715: The SMF network element sends, to the AMF network element, the data size of the service data of the UE that is received by the network this time.

It may be understood that S712 and S715 are in an "or" execution relationship with S713 to S715. For specific implementations of S712 to S715, refer to related descriptions of Manner 4 in S302. Details are not described herein again.

It may be further understood that S707 to S715 may be repeatedly performed a plurality of times, to report a data size of the service data of the UE that is received by the network each time. Alternatively, only S707 and S712 to S715 may be repeatedly performed. If the AMF network element sends the first information to the SMF network element by using S703, S707 to S715 performed subsequently may be considered as that the UPF network element/SMF network element reports the data size for the first time. If the AMF network element sends the first information to the SMF network element by using S711, S707 to S715 or S707 and S712 to S715 repeatedly performed subsequently are considered as that the UPF network element/SMF network element reports the data size for the first time.

S716: The AMF network element sends a downlink data notification message to the RAN device.

The downlink data notification message may include a second data size. For specific implementation, refer to related descriptions of S303. Details are not described herein again.

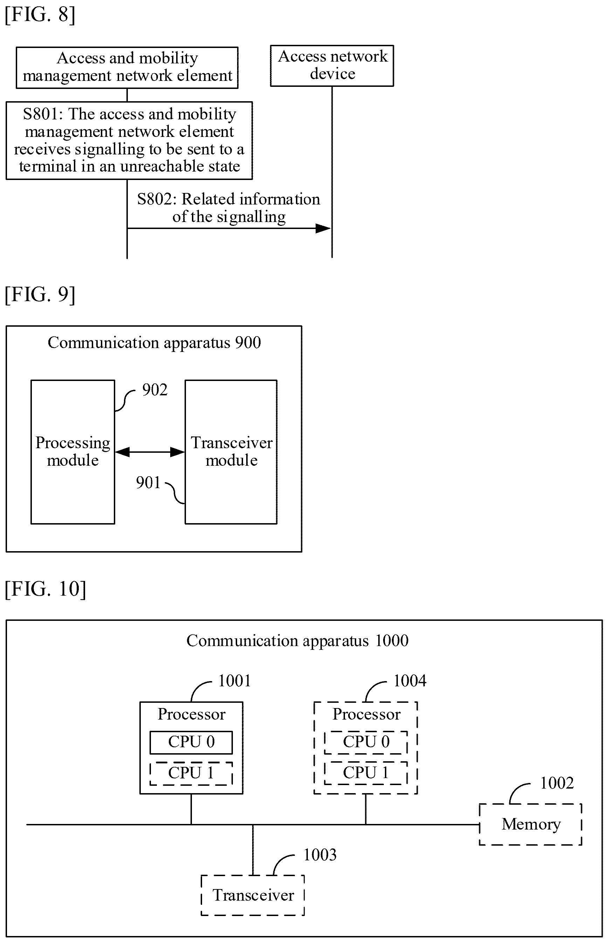

FIG. 8 is a schematic flowchart 5 of a communication method according to an embodiment of this application. The communication method is applicable to the foregoing communication system, and mainly relates to interaction between an access and mobility management network element and a terminal.

As shown in FIG. 8, a procedure of the communication method is as follows.

S801: An access and mobility management network element receives signalling to be sent to a terminal in an unreachable state.

The signalling may be signalling that is sent by another network element in a network, for example, a data management network element (a UDM/UDR network element) or a session management network element (an SMF network element), to the terminal via the access and mobility management network element. A specific signalling type is not limited in this embodiment of this application. In this case, when the access and mobility management network element receives the signalling, the terminal is in the unreachable state in an inactive state. For how the access and mobility management network element determines that the terminal is in the unreachable state in the inactive state, refer to related descriptions in the foregoing embodiments. Details are not described herein again.

S802: The access and mobility management network element sends related information of the signalling to an access network device of the terminal.

The related information of the signalling may be used by the access network device to determine whether small data transmission SDT is used for signalling transmission. For example, the related information of the signalling includes a data size of the signalling. When a state of the terminal changes to a reachable state, for example, the access and mobility management network element may determine, based on an eDRX parameter of the terminal, that the state of the terminal changes to the reachable state, to send the related information of the signalling to the access network device. In other words, the access and mobility management network element may send, to the access network device, the data size of the signalling to be sent by the network to the terminal during an unreachable state of the terminal, to improve accuracy of MT SDT decision.

In conclusion, when receiving the signalling to be sent to the terminal in the unreachable state, the access and mobility management network element may notify the access network device of the related information (for example, the data size) of the signalling, so that the access network device performs more accurate MT SDT decision.

The foregoing describes in detail the communication methods provided in embodiments of this application with reference to FIG. 3 to FIG. 8. The following describes in detail communication apparatuses configured to perform the communication methods provided in embodiments of this application with reference to FIG. 9 and FIG. 10.

FIG. 9 is a diagram 1 of a structure of a communication apparatus according to an embodiment of this application. For example, as shown in FIG. 9, a communication apparatus 900 includes a transceiver module 901 and a processing module 902. For ease of description, FIG. 9 shows only main components of the communication apparatus.

In some embodiments, the communication apparatus 900 may be the access and mobility management network element in the method shown in FIG. 3 or FIG. 8, or the AMF network element in the methods shown in FIG. 5 to FIG. 7A and FIG. 7B.

The transceiver module 901 is configured to implement receiving and sending functions of the access and mobility management network element or the AMF network element in the foregoing methods, for example, perform S302. The processing module 902 is configured to implement a function of the access and mobility management network element or the AMF network element in the foregoing methods other than the receiving and sending functions, for example, perform S301.

Optionally, the transceiver module 901 may include a sending module (not shown in FIG. 9) and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9). The storage module stores a program or instructions. When the processing module 902 executes the program or the instructions, the communication apparatus 900 can perform functions of the network device (for example, the access and mobility management network element or the AMF network element) in the methods shown in FIG. 3 to FIG. 8 in the foregoing method embodiments.

It may be understood that the communication apparatus 900 may be a network device, for example, the access and mobility management network element or the AMF network element, may be a chip (system) or another part or component that may be disposed in the network device, or may be an apparatus including the network device. This is not limited in this application.

In addition, for technical effects of the communication apparatus 900, refer to the technical effects of the communication methods shown in FIG. 3 to FIG. 8. Details are not described herein again.

In some other embodiments, the communication apparatus 900 may be the session management network element in the method shown in FIG. 3, or the SMF network element in the methods shown in FIG. 5 to FIG. 7A and FIG. 7B.

The transceiver module 901 is configured to implement receiving and sending functions of the session management network element or the SMF network element in the foregoing methods, for example, perform S301. The processing module 902 is configured to implement a function of the session management network element or the SMF network element in the foregoing methods other than the receiving and sending functions, for example, perform S302.

Optionally, the transceiver module 901 may include a sending module (not shown in FIG. 9) and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9). The storage module stores a program or instructions. When the processing module 902 executes the program or the instructions, the communication apparatus 900 can perform functions of the network device (for example, the session management network element or the SMF network element) in the methods shown in FIG. 3 to FIG. 8 in the foregoing method embodiments.

It may be understood that the communication apparatus 900 may be a network device, for example, the session management network element or the SMF network element, may be a chip (system) or another part or component that may be disposed in the network device, or may be an apparatus including the network device. This is not limited in this application.

In addition, for technical effects of the communication apparatus 900, refer to the technical effects of the communication methods shown in FIG. 3 to FIG. 8. Details are not described herein again.

FIG. 10 is a diagram 2 of a structure of a communication apparatus according to an embodiment of this application. For example, the communication apparatus may be a network device, for example, an access and mobility management network element or a session management network element, for example, an AMF network element or an SMF network element, or may be a chip (system) or another component or component that may be disposed in the network device. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected through a communication bus.

The following describes components of the communication apparatus 1000 in detail with reference to FIG. 10.

The processor 1001 is a control center of the communication apparatus 1000, and may be a processor, or may be a generic term of a plurality of processing elements. For example, the processor 1001 is one or more central processing units (central processing units, CPUs), or may be an application-specific integrated circuit (application-specific integrated circuit, ASIC), or is configured as one or more integrated circuits that implement embodiments of this application, for example, one or more microprocessors (digital signal processors, DSPs), or one or more field programmable gate arrays (field programmable gate arrays, FPGAs).

Optionally, the processor 1001 may perform various functions of the communication apparatus 1000 by running or executing a software program stored in the memory 1002 and invoking data stored in the memory 1002, for example, perform the communication method shown in FIG. 3 to FIG. 8.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 shown in FIG. 10. Each of the processors may be a single-core processor (single-CPU), or may be a multi-core processor (multi-CPU). The processor herein may be one or more devices, circuits, and/or processing cores configured to process data (for example, computer program instructions).

The memory 1002 is configured to store a software program for executing the solutions of this application, and the processor 1001 controls execution of the software program. For specific implementation, refer to the foregoing method embodiment. Details are not described herein again.

Optionally, the memory 1002 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, and a Blu-ray disc), magnetic disk storage media, or another magnetic storage device, or any another medium that can be used to carry or store desired program code in the form of instructions or a data structure and that can be accessed by a computer, but not limited thereto. The memory 1002 may be integrated with the processor 1001, or may exist independently and is coupled to the processor 1001 through an interface circuit (not shown in FIG. 10) of the communication apparatus 1000. This is not specifically limited in this embodiment of this application.

The transceiver 1003 is configured to communicate with another communication apparatus. For example, the communication apparatus 1000 is the terminal, and the transceiver 1003 may be configured to communicate with a network device or communicate with another terminal device. For another example, the communication apparatus 1000 is a network device, and the transceiver 1003 may be configured to communicate with a terminal or communicate with another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently and is coupled to the processor 1001 through an interface circuit (not shown in FIG. 10) of the communication apparatus 1000. This is not specifically limited in this embodiment of this application.

It may be understood that the structure of the communication apparatus 1000 shown in FIG. 10 does not constitute a limitation on the communication apparatus. An actual communication apparatus may include more or fewer parts than those shown in the figure, combine some parts, or have different part arrangement.

In addition, for technical effects of the communication apparatus 1000, refer to the technical effects of the method in the foregoing method embodiments. Details are not described herein again.

An embodiment of this application provides a communication system. The communication system includes an access and mobility management network element and a session management network element that are configured to perform the method shown in FIG. 3, an AMF network element and an SMF network element that are configured to perform the methods shown in FIG. 4A and FIG. 4B to FIG. 7A and FIG. 7B, or an access and mobility management network element and an access network device that are configured to perform the method shown in FIG. 8.

An embodiment of this application provides a computer-readable storage medium, and includes a computer program or instructions. When the computer program or the instructions are run on a computer, the computer can perform the method corresponding to any one of FIG. 3 to FIG. 8.

An embodiment of this application provides a computer program product, including a computer program or instructions. When the computer program or the instructions are run on a computer, the computer can perform the method corresponding to any one of FIG. 3 to FIG. 8.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external buffer. By way of example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium reachable by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to a conventional technology, or a part of the technical solutions may be implemented in a form of a software product. The computer software product is stored in a storage medium, and includes several instructions for causing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending, by an access and mobility management network element, first information to a session management network element, wherein the first information is used to trigger the session management network element to report a data size of buffered service data of a terminal, and the buffered service data of the terminal is service data buffered by a network when the terminal is in an inactive state;
receiving, by the access and mobility management network element, a first data size from the session management network element, wherein the first data size is the data size of the buffered service data of the terminal; and
sending, by the access and mobility management network element, a second data size to an access network device of the terminal based on the first data size.

2. The method according to claim 1, wherein the sending, by the access and mobility management network element, the first information to the session management network element comprises:
when a state of the terminal changes to a reachable state, sending, by the access and mobility management network element, the first information to the session management network element.

3. The method according to claim 2, wherein the method further comprises:
determining, by the access and mobility management network element, that the state of the terminal changes to the reachable state.

4. The method according to claim 2 or 3, wherein the first information is carried in a session context request message, and the first data size is carried in a session context response message.

5. The method according to claim 1, wherein the first information comprises first indication information, and the first indication information indicates the session management network element to report the data size of the buffered service data of the terminal when a first timer expires.

6. The method according to claim 5, wherein the method further comprises:
determining, by the access and mobility management network element, duration of the first timer based on a discontinuous reception parameter of the terminal; and
sending, by the access and mobility management network element, the duration of the first timer to the session management network element.

7. The method according to claim 5 or 6, wherein the first information further comprises the duration of the first timer.

8. The method according to claim 1, wherein the first information comprises second indication information, and the second indication information indicates the session management network element to report the data size of the buffered service data of the terminal when the data size of the buffered service data of the terminal reaches a buffered data size threshold.

9. The method according to claim 8, wherein the first information further comprises the buffered data size threshold.

10. The method according to claim 8 or 9, wherein the first information is carried in a protocol data unit PDU session context update message, or the first information is carried in a mobile terminated MT response message.

11. The method according to claim 1, wherein the first information comprises third indication information, and the third indication information indicates the session management network element to report a data size of service data of the terminal each time the network receives the service data of the terminal and when the terminal is in an unreachable state in the inactive state.

12. The method according to claim 11, wherein the first information is carried in an MT response message, and the first data size is carried in an MT request message.

13. The method according to any one of claims 1 to 12, wherein the first information further comprises an identifier of a first quality of service QoS flow of the terminal, and the identifier of the first QoS flow indicates that the buffered service data of the terminal is data corresponding to the first QoS flow.

14. The method according to claim 13, wherein the first QoS flow supports an SDT DRB small data transmission data bearer.

15. The method according to claim 14, wherein the method further comprises:
receiving, by the access and mobility management network element, second information from the access network device of the terminal, wherein the second information comprises information about the first QoS flow; and
the sending, by the access and mobility management network element, the first information to the session management network element comprises:
sending, by the access and mobility management network element, the first information to the session management network element based on the information about the first QoS flow.

16. The method according to claim 15, wherein the second information further comprises a data size threshold of the SDT DRB, and the sending, by the access and mobility management network element, the first information to the session management network element comprises:
when a data size of data buffered by the network is less than the data size threshold of the SDT DRB, sending, by the access and mobility management network element, the first information to the session management network element, wherein the data buffered by the network is data corresponding to the first QoS flow.

17. The method according to any one of claims 1 to 16, wherein
the first data size comprises a data size corresponding to at least one QoS flow of the terminal, and the second data size is a data size corresponding to a QoS flow that supports the SDT DRB in the at least one QoS flow; or
the first data size is the same as the second data size.

18. The method according to any one of claims 1 to 17, wherein before the sending, by the access and mobility management network element, the first information to the session management network element, the method further comprises:
receiving, by the access and mobility management network element, the mobile terminated MT request message from the session management network element, wherein the MT request message comprises a third data size, and the third data size is a data size of the buffered service data of the terminal; and
when the terminal is in the unreachable state in the inactive state, sending, by the access and mobility management network element, the MT response message to the session management network element based on the MT request message, wherein the MT response message indicates that the terminal is unreachable.

19. A communication method, wherein the method comprises:
receiving, by a session management network element, first information from an access and mobility management network element, wherein the first information is used to trigger the session management network element to report a data size of buffered service data of a terminal, and the buffered service data of the terminal is service data buffered by a network when the terminal is in an inactive state; and
sending, by the session management network element, a first data size to the access and mobility management network element based on the first information, wherein the first data size is the data size of the buffered service data of the terminal.

20. The method according to claim 19, wherein the first information is carried in a session context request message, and the first data size is carried in a session context response message.

21. The method according to claim 19, wherein the first information comprises first
indication information, and the first indication information indicates the session management network element to report the data size of the service data of the terminal when a first timer expires; and
the sending, by the session management network element, the first data size to the access and mobility management network element based on the first information comprises:
when the first timer expires, sending, by the session management network element, the first data size to the access and mobility management network element.

22. The method according to claim 21, wherein the method further comprises:
when receiving duration of the first timer from the access and mobility management network element, starting, by the session management network element, the first timer.

23. The method according to claim 21 or 22, wherein the first information further comprises the duration of the first timer.

24. The method according to claim 19, wherein the first information comprises second indication information, and the second indication information indicates the session management network element to report the data size of the buffered service data of the terminal when the data size of the buffered service data of the terminal reaches a buffered data size threshold; and
the sending, by the session management network element, the first data size to the access and mobility management network element based on the first information comprises:
when the first data size reaches the buffered data size threshold, sending, by the session management network element, the first data size to the access and mobility management network element.

25. The method according to claim 24, wherein the first information carries the buffered data size threshold.

26. The method according to claim 24 or 25, wherein the first information is carried in a protocol data unit PDU session context update message, or the first information is carried in a mobile terminated MT response message.

27. The method according to claim 19, wherein the first information comprises third indication information, and the third indication information indicates the session management network element to report a data size of service data of the terminal each time the network receives the service data of the terminal and when the terminal is in an unreachable state in the inactive state; and
the sending, by the session management network element, the first data size to the access and mobility management network element based on the first information comprises:
when the network receives the buffered service data of the terminal, sending, by the session management network element to the access and mobility management network element, the data size of the buffered service data of the terminal received this time as the first data size.

28. The method according to claim 27, wherein the first information is carried in an MT response message, and the first data size is carried in an MT request message.

29. The method according to any one of claims 19 to 28, wherein the first information further comprises an identifier of a first quality of service QoS flow of the terminal, and the identifier of the first QoS flow indicates that the buffered service data of the terminal is data corresponding to the first QoS flow.

30. The method according to claim 29, wherein the first QoS flow supports an SDT DRB small data transmission data bearer.

31. The method according to any one of claims 19 to 30, wherein the method further comprises:
locally obtaining, by the session management network element, the first data size from the session management network element based on the first information.

32. The method according to any one of claims 19 to 30, wherein a network element in the network comprises a user plane network element, and the method further comprises:
obtaining, by the session management network element, the first data size from the user plane network element based on the first information.

33. A communication apparatus, wherein the apparatus comprises a module configured to perform the method according to any one of claims 1 to 32.

34. A communication apparatus, wherein the communication apparatus comprises a processor and a memory, the memory is configured to store computer instructions, and when the processor executes the instructions, the communication apparatus is caused to perform the method according to any one of claims 1 to 32.

35. A communication system, wherein the communication system comprises the access and mobility management network element in the method according to any one of claims 1 to 18, and the session management network element in the method according to any one of claims 19 to 32.

36. A computer-readable storage medium, wherein the computer-readable storage medium comprises a computer program or instructions; and when the computer program or the instructions are run on a computer, the computer is caused to perform the method according to any one of claims 1 to 32.
